(19) Europäisches Patentamt
European Patent Office
Office européen des brevets

(11) EP 1 731 037 A1

(12) EUROPEAN PATENT APPLICATION

(43) Date of publication:
13.12.2006 Bulletin 2006/50

(21) Application number: 05012090.6

(22) Date of filing: 04.06.2005

(51) Int Cl.:
*A01N 51/00* (2006.01) *A01N 47/40* (2006.01)
*A01N 43/40* (2006.01)

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicant: Bayer CropScience AG
40789 Monheim (DE)

(72) Inventors:
- Thielert, Wolfgang Dr.
51519 Odenthal (DE)
- Metzlaff, Michael
3080 Tervuren (BE)
- de Block, Marc
9820 Merelbeke (BE)

(54) **Increase of stress tolerance by application of neonicotinoids on plants engineered to be stress tolerant**

(57) The present invention relates to methods for increasing the stress tolerance in plants and plant cells whereby neonicotinoid compounds, such as but not limited to imidacloprid, clothianidin, thiamethoxam, dinotefuran, nitenpyram, acetamiprid or thiacloprid, are applied to plants, or cells thereof, which comprise a genome that has been modified to make the plants or their cells more stress tolerant i.e. plants engineered to be stress tolerant. Particularly effective stress tolerance synergists in combination with genetically modified stress tolerant plants or their cells are neonicotinoid compounds which comprise a chloropyridine side chain, like e.g. imidacloprid, thiacloprid, acetamiprid, nitenpyram and 6-chloronicotinic acid (6-CNA).

EP 1 731 037 A1

## Description

Methods are provided for increasing the stress tolerance in plants and plant cells whereby neonicotinoid compounds such as but not limited to imidacloprid, clothianidin, thiamethoxam, dinotefuran, nitenpyram, acetamiprid or thiacloprid, are applied to plants, or cells thereof, which comprise a genome that has been modified to make the plants or their cells more stress tolerant i.e. plants engineered to be stress tolerant. Particularly effective stress tolerance synergists in combination with genetically modified stress tolerant plants or their cells are neonicotinoid compounds which comprise a chloropyridine side chain, like e.g. imidacloprid, thiacloprid, acetamiprid, nitenpyram and 6-chloronicotinic acid (6-CNA).

## Background art

Plants engineered to be stress tolerant are known in the art. Stress tolerance in plant cells and plants can e.g. be achieved by reducing the activity or the level of the endogenous poly-ADP-ribose polymerases (ParP) or poly(ADP-ribose) glycohydrolases (ParG) as described in WO 00/04173 A1 and PCT/EP2004/003995, respectively. It is thought that in this way, fatal NAD and ATP depletion in plant cells subject to stress conditions, resulting in traumatic cell death, can be avoided or sufficiently postponed for the stressed cells to survive and acclimate to the stress conditions.

European patent application No. 04077624.7 describes that stress tolerance in plants and plant cells is achieved by using nucleotide sequences encoding enzymes involved in the NAD salvage synthesis pathway and/or the NAD *de novo* synthesis pathway e.g. for overexpression in plants.

The application of compounds of the class of neonicotinoids on plants for purposes other than insect control is also known from the art (WO 01/26468 A2, WO 03/096811 A1).

WO 01/26468 A2 discloses a method of improving the growth of plants comprising applying to the plants or the locus thereof at least one compound selected from the class of the neonicotinoids.

WO03/096811 A1 describes that the yield and/or the vigor of an agronomic plant can be increased or improved in locations where the level of insect infestation below that indicating the need for the use of an insecticide for insect control purposes by treating a seed of the plant with a neonicotinoid compound. The method is deemed useful for non-transgenic plants and for plants having a foreign gene that encodes for the production of a modified *Bacillus thuringiensis* delta-endotoxin protein.

However, the art remains silent on the possibility to increase the health and vigor of stress tolerant plants such as described in the prior art, and, in addition, further increase the stress tolerance of plants already engineered to be stress tolerant by application of chemical compounds.

## Summary of the invention

Briefly therefore, the present invention is directed to a novel method of increasing the stress tolerance of plants and plant cells which are engineered to be stress tolerant, comprising treating the plant and/or the habitat of said plants, the plant cells or the seeds from which such plants are grown with a neonicotinoid compound.

The present invention is also directed to a novel method of increasing the health and vigor of plants and plant cells which are engineered to be stress tolerant, comprising treating the plant and/or the habitat of said plants, the plant cells or the seeds from which such plants are grown with a neonicotinoid compound.

The present invention is also directed to a novel seed from which stress-tolerant plants are grown from and that is treated with a neonicotinoid compound.

## Detailed description

As used herein, "plants engineered to be stress tolerant" or "plant cells engineered to be stress tolerant", refers to plants or cells and seed thereof, which contain foreign DNA comprising an exogenous stress tolerance enhancing gene or a variant of an endogenous gene corresponding to such a exogenous stress tolerance enhancing gene, which variant results in higher stress tolerance of the plant cells or plants harbouring such variant.

In accordance with the present invention, it has been discovered that the stress tolerance, health and vigor of a plant which is engineered to be stress tolerant can be increased by treating the plants or the seed of the plant and/or the habitat of said plants with an effective amount of a neonicotinoid compound. Surprisingly, such neonicotinod compounds have the capability of causing an increase in the stress tolerance and health of plants which are already more stress tolerant than the respective wild-type plants. This effect even exceeds the effect which could be expected from merely relying on the added effects of the growth enhancing properties of neonicotinoids when applied on plants, such as described in WO 01/26468 A2 and of the effects derived from the engineered stress tolerance of a given plant. The effect is independent of the presence of insects which are the targets of the above-mentioned neonicotinoids. Accordingly,

the effect is connected with the biochemical improvement of the stress-tolerance of a plant or plant cell or the seed from which it is grown. It has been discovered that this effect enhances the genetically engineered stress tolerance of such engineered plants and plant cells.

As used herein, "stress tolerance" refers to a better tolerance to stress, compared to the non-engineered plant, when stress is applied to a plant e.g. by the application of chemical compounds (e.g. herbicides, fungicides, insecticides, plant growth regulators, adjuvants, fertilizers), exposure to abiotic stress (e.g. drought, high light conditions, extreme temperatures, ozone and other atmospheric pollutants, soil salinity or heavy metals) or biotic stress (e.g. pathogen or pest infection including infection by fungi, viruses, bacteria, insects, nematodes, mycoplasms and mycoplasma like organisms etc.).

In one embodiment of the invention, a method is described which is useful to increase the stress tolerance and health of a plant or plant cell or seed from which such plant is grown and which is engineered to be stress tolerant, comprising applying to said plant and/or its habitat, to a plant cell or to seed from which said plants are grown an effective amount of a neonicotinoid compound of the formula (I)

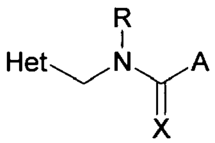

(I)

wherein

Het represents a heterocycle which is in each case optionally mono- or polysubstituted by fluorine, chlorine, methyl or ethyl, which heterocycle is selected from the following group of heterocycles:
pyrid-3-yl, pyrid-5-yl, 3-pyridinio, 1-oxido-5-pyridinio, 1-oxido-5-pyridinio, tetra-hydrofuran-3-yl, thiazol-5-yl,

A represents $C_1$-$C_6$-alkyl, -N($R^1$)($R^2$) or S($R^2$),
in which
$R^1$ represents hydrogen, $C_1$-$C_6$-alkyl, phenyl-$C_1$-$C_4$-alkyl, $C_3$-$C_6$-cycloalkyl, $C_2$-$C_6$-alkenyl or $C_2$-$C_6$-alkynyl, and
$R^2$ represents $C_1$-$C_6$-alkyl, $C_2$-$C_6$-alkenyl, $C_2$-$C_6$-alkynyl, -C(=O)-$CH_3$ or benzyl,

R represents hydrogen, $C_1$-$C_6$-alkyl, $C_2$-$C_6$-alkenyl, $C_2$-$C_6$-alkynyl, -C(=O)-$CH_3$ or benzyl or together with $R^2$ represents the groups below:
$-CH_2-CH_2-$, $-CH_2-CH_2-CH_2-$, $-CH_2-O-CH_2-$, $-CH_2-S-CH_2-$, $-CH_2-NH-CH_2-$, $-CH_2-N(CH_3)-CH_2-$, and

X represents N-$NO_2$, N-CN or CH-$NO_2$.

Saturated or unsaturated hydrocarbon radicals, such as alkyl or alkenyl, can in each case be straight-chain or branched as far as this is possible, including in combination with heteroatoms, such as, for example, in alkoxy.

These compounds are known to have insecticidal activity (see, for example, EP-A1-192 606, EP-A2-580 533, EP-A2-376 279, EP-A2-235 725).

Preferred compounds of the formula (I) which may be mentioned are the neonicotinoids listed in "The Pesticide Manual", 13th Edition, 2003 (British Crop Protection Council).

A very particularly preferred compound is imidacloprid of the formula

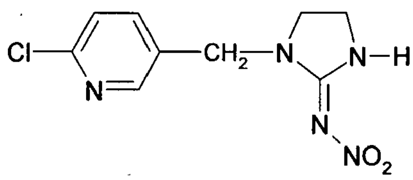

,

known, for example, from EP A1 0 192 060.

A further very particularly preferred compound is acetamiprid of the formula

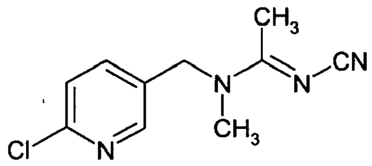

,

known, for example, from WO A1 91/04965.

A further very particularly preferred compound is thiacloprid of the formula

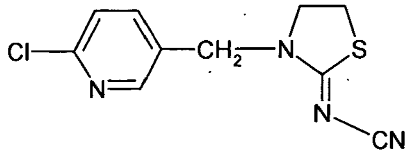

,

known, for example, from EP A2 0 235 725.

A further very particularly preferred compound is nitenpyram of the formula

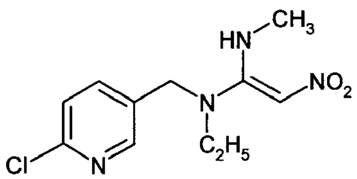

,

known, for example, from EP A2 0 302 389.

A further preferred compound is clothianidin of the formula

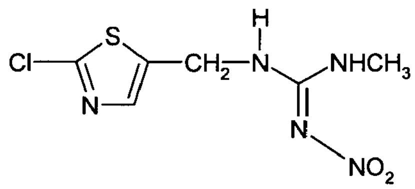

,

know, for example, from EP A2 0 376 279.

A further preferred compound is thiamethoxam of the formula

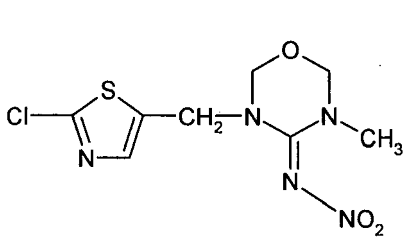

,

known, for example, from EP A2 0 580 553.

A further preferred compound is dinotefuran of the formula

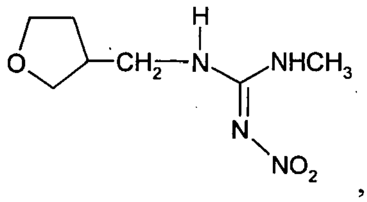

known, for example, from EP A1 0 649 845.

Imidacloprid is an especially preferred compound for the use in methods according to the invention. Clothianidin should also be mentioned as a preferred compound in the context of the present invention.

In another embodiment of the invention, a method is described which is useful to increase the stress tolerance and health of a plant or plant cell or seed from which such plant is grown and which is engineered to be stress tolerant, comprising applying to said plant and/or its habitat, to a plant cell or to seed from which said plants are grown an effective amount of 6-chloronicotinic acid (niacin, CAS NO: 5326-23-8) of the formula

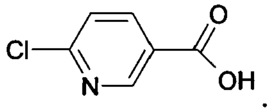

6-Chloronicotinic acid can be set free during the degradation of the above mentioned neonicotinoids which carry this group, such as imidacloprid, thiacloprid, acetamiprid, nitenpyram. For example, imidacloprid is degraded stepwise to the primary metabolite 6-chloronicotinic acid, which eventually breaks down into carbon dioxide. It was discovered that this metabolite also increases the stress tolerance and health of a plant or plant cell or seed from which such plant is grown and which has been engineered to be stress tolerant.

The compounds mentioned above cause an increase of stress tolerance of plants or cells and seed thereof, which contain foreign DNA comprising an exogenous stress tolerance enhancing gene or a variant of an endogenous gene corresponding to such an exogenous stress tolerance enhancing gene, which variant results in higher stress tolerance of the plant cells or plants harbouring such variant.

As a rule, an increase in stress tolerance means at least a significant reduction of a stress indicating parameter, which can be measured either as a morphological, physiological or biochemical difference in a comparison of stressed untreated, non-transgenic reference plants or cells and seed thereof versus treated, transgenic reference plants or cells and seed thereof. "Health" as it is mentioned herein, refers to a significant lower infestation level of plants, cells and seed thereof with pests and diseases , which e.g. can be counted or estimated as a number of individual pest species present or as macroscopical symptoms expression (e.g. relative relative leaf area reduction, leaf area infestation, leaf area necrosis). Significance is proven with the Colby formula. Moreover, resistance to stress conditions can also be measured by measuring NAD(H) levels (which remain higher in stressed, tolerant plants than in stressed control plants) and reactive oygen species level (lower in stressed, tolerant plants than in stressed control plants) under stress conditions as described in European patent application EP04077624.7 (incorporated herein by reference)

One of the advantages of the present invention is that the particular systemic properties of the compounds according to the invention and compositions comprising said compounds mean that treatment of the seed of plants which have been engineered to be stress tolerant with these compositions increases the stress tolerance of the germinating plant and the resulting plant after emergence. In this manner, the immediate treatment of the crop at the time of sowing or shortly thereafter can be dispensed with.

In another embodiment of the invention, a method is described which is useful to increase the stress tolerance and health of a plant or plant cell or seed from which such plant is grown and which is engineered to be stress tolerant, comprising applying to said plant and/or its habitat, to a plant cell or to seed from which said plants are grown an effective amount of a composition comprising the compounds of the formula (I).

Accordingly, the invention also relates to compositions comprising the compounds of the formula (I) for the use of such compositions according to the invention.

The compounds of formula (I) can be used also in a mixture with other active compounds, for example, insecticides, bactericides, miticides, fungicides, etc. in the form of their commercially useful formulations or in the application forms prepared from such formulations. This can be done to obtain compositions which in addition to improving the stress tolerance and health of the plants according to the invention also combat pests which may be present. Insecticides which can be used are, for example, organophosphorous agents, carbamate agents, carboxylate type chemicals, chlorinated hydrocarbon type chemicals, insecticidal substances produced by microbes, etc.

In many cases, this results in synergistic effects, i.e. the activity of the mixture exceeds the activity of the individual components. Such formulations and application forms are commercially and ecologically especially useful as generally lower amounts of active ingredients can be used. A synergist, however, must not necessarily be active itself, as long as it enhances the action of the active compound.

A mixture with other known active compounds, such as herbicides, or with safeners, fertilizers and growth regulators is also possible.

Treatment according to the invention of the plants and plant parts with the active compounds is carried out directly or by allowing the compounds to act on their surroundings, environment or storage space by the customary treatment methods, for example by immersion, spraying, evaporation, fogging, scattering, painting on and, in the case of propagation material, in particular in the case of seed, also by applying one or more coats.

The active compounds can be converted into the customary formulations, such as solutions, emulsions, wettable powders, suspensions, powders, dusts, pastes, soluble powders, granules, suspension-emulsion concentrates, natural and synthetic materials impregnated with active compound, and microencapsulations in polymeric substances.

The content of the active compounds of the present invention in a commercially useful formulation or application form can be varied in a wide range. The active-compound content of the use forms prepared from the commercial formulations can vary within wide limits.

These formulations are produced in a known manner, for example by mixing the active compounds with extenders, that is liquid solvents and/or solid carriers, optionally with the use of surfactants, that is emulsifiers and/or dispersants, and/or foam-formers.

If the extender used is water, it is also possible to employ for example organic solvents as auxiliary solvents. Essentially, suitable liquid solvents are: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethylformamide and dimethyl sulphoxide, and also water.

As solid carriers there are suitable: for example ammonium salts and ground natural minerals such as kaolins, clays, talc, chalk, quartz, attapulgite, montmorillonite or diatomaceous earth, and ground synthetic minerals, such as highly disperse silica, alumina and silicates; as solid carriers for granules there are suitable: for example crushed and fractionated natural rocks such as calcite, marble, pumice, sepiolite and dolomite, and also synthetic granules of inorganic and organic meals, and granules of organic material such as sawdust, coconut shells, maize cobs and tobacco stalks; as emulsifiers and/or foam-formers there are suitable: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and also protein hydrolysates; as dispersants there are suitable: for example ligninsulphite waste liquors and methylcellulose.

Tackifiers such as carboxymethylcellulose and natural and synthetic polymers in the form of powders, granules or latices, such as gum arabic, polyvinyl alcohol and polyvinyl acetate, as well as natural phospholipids such as cephalins and lecithins, and synthetic phospholipids, can be used in the formulations. Other additives can be mineral and vegetable oils.

It is possible to use colorants such as inorganic pigments, for example iron oxide, titanium oxide and Prussian Blue, and organic dyes, such as alizarin dyes, azo dyes and metal phthalocyanine dyes, and trace nutrients such as salts of iron, manganese, boron, copper, cobalt, molybdenum and zinc.

The formulations generally comprise between 0.1 and 98% by weight of active compound, preferably between 0.1 and 90% and particularly preferably between 0.5 and 70% by weight of active compound.

The advantageous stress tolerance enhancing effect of the neonicotinoid compounds and 6-CNA is particularly strongly pronounced at certain application rates. However, the application rates of the active compounds can be varied within relatively wide ranges. In general, the rates of applications are from 1 g to 1600 g of the active compound per hectare, preferably from 10 g to 800 g of the active compound per hectare, and particularly preferably from 10 g to 600 g of the active compound per hectare

As mentioned before, one embodiment of the invention is a method which is useful to increase the stress tolerance and health of a plant which is engineered to be stress tolerant, comprising applying to the plant propagation material including seed from which said plant is grown an effective amount of a composition comprising the compounds of the formula (I). The plant propagation material may be treated before planting, for example seed may be dressed before sowing. The compounds according to the invention may also be applied to seed grains either by impregnating the grains with a liquid formulation or by coating them with a solid formulation.. The composition may also be applied to the planting site when the propagation material is being planted, e.g. during sowing.

Accordingly, the invention also relates to seed of a plant which is engineered to be stress tolerant and which has been treated with a compound according to the invention.

In connection with the treatment of plant propagation material such as seeds, favourable rates of application are in general 0,1 to 1000g, in particular 1 to 800g, preferably 10 to 500 g of one of the neonicotinoid compounds or 6-CNA per 100 kg of material to be treated.

Crops which can be improved according to the present method include any plant engineered to be stress resistant, both dicotyledonous and monocotyledonous seeds, plant cells especially cotton, canola, oilseed rape, wheat, corn or maize, barley, rice, oats, rye, buckwheat, triticale, sugarcane, soybean, sunflowers, alfalfa, bean, flax, mustard, pea, tobacco, potato, sweet potato, sugarbeet, turfgrass, sorghum, millet, vegetable brassicas, other vegetables (including artichoke, asparagus, carrot, celery, chicory, cucumbers, eggplants, leek, lettuce, melons, okra, onion, pepper, pumpkin, radish, rutabaga, safflower, spinach, squash, tomato, watermelons, yam, zucchini), almond, apple, apricot, banana, blackberry, blueberry, cacao, citrus (including grapefruit, lemon, orange, kumquat, lime, mandarin, tangerine, pummelo and Satsuma mandarin), cherry, coconut, cranberry, date, gooseberry, grape, guava, kiwi, mango, nectarine, papaya, passion fruit, peach, peanut, pear, pineapple, pecan, pistachio, plum, raspberry, strawberry, teaplant, walnut but also plants used in horticulture, floriculture or forestry.

All plants and plant parts can be treated in accordance with the invention. Plant parts are to be understood to mean all above-ground and underground parts and organs of plants, such as shoot, leaf, flower and root, examples which may be mentioned being leaves, needles, stalks, stems, flowers, fruit bodies, fruits, seeds, roots, tubers and rhizomes. The plant parts also include harvested material, and vegetative and generative propagation material, for example cuttings, tubers, rhizomes, offsets and seeds. They also include plant cells, such as may be used or result from the transformation of a plant cell in accordance with the invention. It is also possible to apply the aforementioned compounds onto or into the soil, e.g. before planting or sowing to achieve the effect described, e.g. to enhance the stress tolerance of the plants after planting and the emerging plant which grows from a seed which has been sown into treated soil.

The plants, plant cells and seed referred to in this invention are engineered to increase the stress tolerance of said plants in a specific way.

In one embodiment of the invention, an exogenous stress tolerance enhancing gene is capable of reducing the expression and/or the activity of poly(ADP-ribose)polymerase (PARP) gene in the plant cells or plants as described in WO 00/04173 A1 or EP 04077984.5 (herein incorporated by reference).

Poly(ADP-ribose) polymerase (PARP), also known as poly(ADP-ribose) transferase (ADPRT) (EC 2.4.2.30), is a nuclear enzyme found in most eukaryotes, including vertebrates, arthropods, molluscs, slime moulds, dinoflagellates, fungi and other low eukaryotes with the exception of yeast. The enzymatic activity has also been demonstrated in a number of plants (Payne *et al.,* 1976; Willmitzer and Wagner, 1982; Chen *et al.,* 1994; O'Farrell, 1995).

PARP catalyzes the transfer of an ADP-ribose moiety derived from $NAD^+$, mainly to the carboxyl group of a glutamic acid residue in the target protein, and subsequent ADP-ribose polymerization. The major target protein is PARP itself, but also histones, high mobility group chromosomal proteins, topoisomerase, endonucleases and DNA polymerases have been shown to be subject to this modification.

As a particular embodiment, the stress tolerance enhancing gene may comprise the following operably linked DNA fragments:

a) a plant-expressible promoter;

b) a DNA region which when transcribed results in an RNA molecule capable of reducing the expression of the endogenous PARP encoding genes of a plant (a PARP inhibitory RNA molecule);

c) a DNA region involved in transcription termination and polyadenylation.

The mentioned DNA region may result in a so-called antisense RNA molecule reducing in a transcriptional or post-transcriptional manner the expression of a PARP encoding gene in the target plant or plant cell, comprising at least 20 or 21 consecutive nucleotides having at least 95% to 100% sequence identity to the complement of the nucleotide sequence of a PARP encoding gene present in the plant cell or plant.

The mentioned DNA region may also result in a so-called sense RNA molecule comprising reducing in a transcriptional or post-transcriptional manner the expression of a PARP encoding gene in the target plant or plant cell, comprising at least 20 or 21 consecutive nucleotides having at least 95% to 100% sequence identity to the nucleotide sequence of a PARP encoding gene present in the plant cell or plant.

However, the minimum nucleotide sequence of the antisense or sense RNA region of about 20 nt of the PARP coding region may be comprised within a larger RNA molecule, varying in size from 20 nt to a length equal to the size of the target gene. The mentioned antisense or sense nucleotide regions may thus be about from about 21 nt to about 5000 nt long, such as 21 nt, 40 nt, 50 nt, 100 nt, 200 nt, 300 nt, 500 nt, 1000 nt, 2000 nt or even about 5000 nt or larger in length. Moreover, it is not required for the purpose of the invention that the nucleotide sequence of the used inhibitory PARP RNA molecule or the encoding region of the exogenous gene, is completely identical or complementary to the

endogenous PARP gene the expression of which is targeted to be reduced in the plant cell. The longer the sequence, the less stringent the requirement for the overall sequence identity is. Thus, the sense or antisense regions may have an overall sequence identity of about 40 % or 50 % or 60 % or 70 % or 80 % or 90 % or 100 % to the nucleotide sequence of the endogenous PARP gene or the complement thereof. However, as mentioned antisense or sense regions should comprise a nucleotide sequence of 20 consecutive nucleotides having about 100 % sequence identity to the nucleotide sequence of the endogenous PARP gene. Preferably the stretch of about 100% sequence identity should be about 50, 75 or 100 nt.

For the purpose of this invention, the "sequence identity" of two related nucleotide sequences, expressed as a percentage, refers to the number of positions in the two optimally aligned sequences which have identical residues (x100) divided by the number of positions compared. A gap, i.e. a position in an alignment where a residue is present in one sequence but not in the other is regarded as a position with non-identical residues. The alignment of the two sequences is performed by the Needleman and Wunsch algorithm (Needleman and Wunsch 1970) Computer-assisted sequence alignment, can be conveniently performed using standard software program such as GAP which is part of the Wisconsin Package Version 10.1 (Genetics Computer Group, Madison, Wisconsin, USA) using the default scoring matrix with a gap creation penalty of 50 and a gap extension penalty of 3.

It will be clear that whenever nucleotide sequences of RNA molecules are defined by reference to nucleotide sequence of corresponding DNA molecules, the thymine (T) in the nucleotide sequence should be replaced by uracil (U). Whether reference is made to RNA or DNA molecules will be clear from the context of the application.

The efficiency of the above mentioned exogenous genes in reducing the expression of the endogenous PARP gene may be further enhanced by inclusion of DNA elements which result in the expression of aberrant, unpolyadenylated PARP inhibitory RNA molecules. One such DNA element suitable for that purpose is a DNA region encoding a self-splicing ribozyme, as described in WO 00/01133 A1.

The efficiency of the above mentioned exogenous genes in reducing the expression of the endogenous PARP gene of a plant cell may also be further enhanced by including into one plant cell simultaneously a exogenous gene as herein described encoding a antisense PARP inhibitory RNA molecule and a exogenous gene as herein described encoding a sense PARP inhibitory RNA molecule, wherein said antisense and sense PARP inhibitory RNA molecules are capable of forming a double stranded RNA region by base pairing between the mentioned at least 20 consecutive nucleotides, as described in WO 99/53050 A1.

As further described in WO 99/53050 A1, the sense and antisense PARP inhibitory RNA regions, capable of forming a double stranded RNA region may be present in one RNA molecule, preferably separated by a spacer region. The spacer region may comprise an intron sequence. Such an exogenous gene may be conveniently constructed by operably linking a DNA fragment comprising at least 20 nucleotides from the isolated or identified endogenous PARP gene, the expression of which is targeted to be reduced, in an inverted repeat, to a plant expressible promoter and 3'end formation region involved in transcription termination and polyadenylation. To achieve the construction of such an exogenous gene, use can be made of the vectors described in WO 02/059294 A1.

Current nomenclature refers to the classical Zn-finger-containing polymerases as PARP1 proteins (and corresponding parp1 genes) whereas the structurally non-classical PARP proteins are currently referred to as PARP2 (and corresponding parp2 genes) and PARP encoding genes as used herein, may refer to either type.

The following database entries (herein incorporated by reference) identifying experimentally demonstrated and putative poly ADP-ribose polymerase protein sequences, parts thereof or homologous sequences, could be used according to the current invention: BAD53855 (*Oryza sativa*); BAD52929 (*Oryza sativa*); XP_477671 (*Oryza sativa*); BAC84104 (*Oryza sativa*); AAT25850 (*Zea mays*); AAT25849 (*Zea mays*); NP_197639 *(Arabidopsis thaliana);* NP_850165 *(Arabidopsis thaliana);* NP_188107 *(Arabidopsis thaliana);* NP_850586 *(Arabidopsis thaliana);* BAB09119 *(Arabidopsis thaliana);* AAD20677 *(Arabidopsis thaliana);* Q11207 *(Arabidopsis thaliana);* C84719 *(Arabidopsis thaliana);* T51353 *(Arabidopsis thaliana);* T01311 *(Arabidopsis thaliana*); AAN12901 *(Arabidopsis thaliana);* AAM13882 *(Arabidopsis thaliana*); CAB80732 *(Arabidopsis thaliana);* CAA10482 *(Arabidopsis thaliana);* AAC79704 (*Zea mays*): AAC19283 (*Arabidopsis thaliana);* CAA10888 (*Zea mays*); CAA10889 (*Zea mays*); CAA88288 *(Arabidopsis thaliana*).

As a particular embodiment of the invention, the PARP gene expression reducing gene may comprise the following operably linked DNA fragments:

a) a plant expressible promoter

b) a DNA region which when transcribed yields an RNA molecule, the RNA molecule comprising:

a. An antisense nucleotide sequence comprising at least about 20 consecutive nucleotides having about 96% sequence identity to a nucleotide sequence of about 20 consecutive nucleotides selected from the nucleotide sequences of SEQ ID 1 (Arabidopsis parp1 coding region) SEQ ID 2 (Arabidopsis parp 2 coding region) SEQ ID 3 (*Zea mays* parp1 coding region), SEQ ID 4 (another *Zea mays* parp1 coding region), SEQ ID 5 (*Zea mays*

parp2 coding region) or SEQ ID 6 (cotton parp2 partial cDNA) or from nucleotide sequences encoding proteins with similar or identical amino acid sequences as encoded by the mentioned nucleotide sequences.

b. A sense nucleotide sequence comprising at least about 20 nucleotides which are complementary to the antisense nucleotide sequence. The sense nucleotide sequence may thus comprise a sequence of at least about 20 consecutive nucleotides having about 96% sequence identity to a nucleotide sequence of about 20 consecutive nucleotides selected from the nucleotide sequences of SEQ ID 1 (Arabidopsis parp1 coding region) SEQ ID 2 (Arabidopsis parp 2 coding region) SEQ ID 3 (Zea mays parp1 coding region), SEQ ID 4 (another Zea mays parp1 coding region), SEQ ID 5 (Zea mays parp2 coding region) or SEQ ID 6 (cotton parp2 partial cDNA) of from from nucleotide sequences encoding proteins with similar or identical amino acid sequences as encoded by the mentioned nucleotide sequences;

whereby the sense and antisense nucleotide sequence are capable of forming a double stranded RNA molecule (dsRNA);

c) A DNA region for transcription termination and polyadenylation.

However, it will be clear that other PARP encoding genes as described in WO00/04173 or EP 04077984.5 may be used.

It will also be clear that the goal of the current invention to increase stress tolerance may also be achieved by applying the mentioned chemical compounds on plants or plant cells which comprise in their genome a variant PARP encoding gene whereby the PARP expression and/or activity is reduced when compared with PARP expression and/or activity in a similar plant, which would also result in increased stress tolerance of the plant with the variant PARP. Such variant PARP encoding genes may be induced, e.g. by mutagenesis or it may be naturally occurring alleles of PARP encoding genes, which are correlated with increased stress tolerance of the harboring plants.

In another embodiment of the invention, the mentioned compounds are applied on plants or plant cells comprising an exogenous stress tolerance enhancing gene capable of reducing the expression and/or the activity of the ParG encoding genes of the plants or plants cells, as described e.g. in WO 2004/090140 (herein incorporated by reference).

PARG (poly (ADP-ribose) glycohydrolase; E.C.3.2.1.143) converts poly (ADP-ribose) polymers to free ADP-ribose by its exoglycosidase and endoglycosidase activity (PARG).

In plants, a poly(ADP-ribose) glycohydrolase has been identified by map-based cloning of the wild-type gene inactivated in a mutant affected in clock-controlled transcription of genes in Arabidopsis and in photoperiod dependent transition from vegetative growth to flowering (tej). The nucleotide sequence of the gene can be obtained from nucleotide databases under the accession number AF394690 (Panda et al., 2002 Dev. Cell. 3, 51-61; SEQ ID No 7)

Nucleotide sequences of other plant PARG encoding genes from plants can be found in WO 2004/090140 A2, such as the PARG gene from *Solanum tuberosum* (SEQ ID No 8); *Oryza sativa* (SEQ ID No 9) or *Zea mays* (SEQ ID No 10) as well as methods to isolate additional PARG encoding genes and variants thereof from other plants.

Thus, in one embodiment, the plants or plant cells engineered to be stress resistant may comprise the following operably linked DNA fragments:

a) a plant expressible promoter

b) a DNA region, which when transcribed yields an inhibitory RNA molecule, the RNA molecule comprising

i. a antisense nucleotide region comprising at least 20 consecutive nucleotides having at least 96% sequence identity to a nucleotide sequence of about 20 nucleotides selected from the complement of a nucleotide sequence encoding a plant PARG protein, such as the nucleotide sequences of SEQ ID 7, SEQ ID 8, SEQ ID 9 or SEQ ID 10 or nucleotide sequences encoding proteins with similar or identical amino acid sequences as the nucleotide sequences mentioned; or

ii. a sense nucleotide region comprising at least 20 consecutive nucleotides selected from a nucleotide sequence encoding a plant PARG protein, such as the nucleotide sequences of SEQ ID 7, SEQ ID 8, SEQ ID 9 or SEQ ID 10 or nucleotide sequences encoding proteins with similar or identical amino acid sequences as the nucleotide sequences mentioned; or

iii. a antisense and sense nucleotide sequences as mentioned sub i) or ii) whereby said antisense and sense nucleotide sequence are capable of forming a double stranded RNA molecule;

c) A DNA region involved in transcription termination and polyadenylation.

It will be immediately clear to the skilled artisan that additional parameters of length of sense and antisense nucleotide sequences or dsRNA molecules, and sequence identity for the ParG inhibitory RNA molecules can be used as mentioned above for the PARP inhibitory RNA molecules.

In yet another embodiment of the invention, the exogenous stress tolerance enhancing gene may comprise the following operably linked DNA molecules:

a) a plant-expressible promoter;

b) a DNA region coding for a plant-functional enzyme of the nicotinamide adenine dinucleotide salvage synthesis pathway selected from nicotinamidase, nicotinate phosphoribosyltransferase, nicotinic acid mononucleotide adenyl transferase or nicotinamide adenine dinucleotide synthetase; and

c) a 3'end region involved in transcription termination and polyadenylation,

as described in EP 04077624.7 (herein incorporated by reference).

As used herein, "a plant-functional enzyme of the nicotinamide adenine dinucleotide salvage synthesis pathway" is an enzyme which when introduced into plants, linked to appropriate control elements such as plant expressible promoter and terminator region, can be transcribed and translated to yield a enzyme of the NAD salvage synthesis pathway functional in plant cells. Included are the enzymes (and encoding genes) from the NAD salvage synthesis, which are obtained from a plant source, but also the enzymes obtained from yeast (Saccharomyces cereviseae) or from other yeasts or fungi. It is thought that the latter proteins may be even more suitable for the methods according to the invention, since these are less likely to be subject to the enzymatic feedback regulation etc. to which similar plant-derived enzymes may be subject.

Enzymes involved in the NAD salvage synthesis pathway comprise the following

- Nicotinamidase (EC 3.5.1.19) catalyzing the hydrolysis of the amide group of nicotinamide, thereby releasing nicotinate and NH3. The enzyme is also known as nicotinamide deaminase, nicotinamide amidase, YNDase or nicotinamide amidohydrolase
- Nicotinate phophoribosyltransferase (EC 2.4.2.11) also known as niacin ribonucleotidase, nicotinic acid mononucleotide glycohydrolase; nicotinic acid mononucleotide pyrophosphorylase; nicotinic acid phosphoribosyltransferase catalyzing the following reaction

$$\text{Nicotinate-D-ribonucleotide + diphosphate = nicotinate + 5-phospho-}\alpha\text{-D}$$

$$\text{ribose 1-diphosphate}$$

- Nicotinate-nucleotide adenylyltransferase, (EC 2.7.7.18) also known as deamido-NAD+ pyrophosphorylase; nicotinate mononucleotide adenylyltransferase; deamindonicotinamide adenine dinucleotide pyrophsophorylase; NaMT-ATase; nicotinic acid mononucleotide adenylyltransferase catalyzing the following reaction

$$\text{Deamido-NAD}^+\text{+ATP+NH3 = AMP+ diphosphate + NAD}^+$$

- NAD-synthase (EC 6.3.1.5) also known as NAD synthetase; $NAD^+$synthase; nicotinamide adenine dinucleotide synthetase; diphosphopyridine nucleotide synthetase, catalyzing the following reaction

$$\text{Deamido-NAD}^+\text{+ATP+NH3 = AMP+ diphosphate + NAD}^+$$

In one embodiment of the invention, the DNA regions coding for a plant functional enzyme of the NAD salvage

pathway may comprise a nucleotide sequence from SEQ ID Nos 11, 12, 13, 14 or 15 or a nucleotide sequence encoding a protein with similar or identical amino acid sequences as the proteins encoded by the above mentioned nucleotide sequences.

As described by Hunt et al., 2004 plant homologues of these enzymes have been identified and these DNA sequences may be used to similar effect(Hunt et al. , 2004, New Phytologist163(1): 31-44). The identified DNA sequences have the following Accession numbers: for nicotinamidase: At5g23220 (SEQ ID No 16); At5g23230 (SEQ ID No 17) and At3g16190 (SEQ ID No 18); for nicotinate phosphoribosyltransferase: At4g36940 (SEQ ID No 19), At2g23420 (SEQ ID No 20), for nicotinic acid mononucleotide adenyltransferase: At5g55810 (SEQ ID No 21) and for NAD synthetase: At1g55090 (SEQ ID No 22).

However, it will be clear that the plants engineered to be stress resistant may also comprise variants of these nucleotide sequences, including insertions, deletions and substitutions thereof. Equally, homologues to the mentioned nucleotide sequences from species different from *Saccharomyces cerevisea* can be used. These include but are not limited to nucleotide sequences from plants, and nucleotide sequences encoding proteins with the same amino acid sequences, as well as variants of such nucleotide sequences.

Variants of the described nucleotide sequence will have a sequence identity which is preferably at least about 80%, or 85 or 90% or 95% with identified nucleotide sequences encoding enzymes from the NAD salvage pathway, such as the ones identified in the sequence listing. Preferably, these variants will encode functional proteins with the same enzymatic activity as the enzymes from the NAD salvage pathway.

The methods of the invention can be used to increase the tolerance of plants or plant cells to different kinds of stress-inducing conditions, particularly abiotic stress conditions including submergence, high light conditions, high UV radiation levels, increased hydrogen peroxide levels, drought conditions, high or low temperatures, increased salinity conditions, application of herbicides, pesticides, insecticides etc. The methods of the invention can also be used to reduce the level of reactive oxygen species (ROS) or to increase the level of NAD+, NADH+ or ATP in the cells of plants growing under adverse conditions, particularly abiotic stress conditions including submergence, high light conditions, high UV radiation levels, increased hydrogen peroxide levels, drought conditions, high or low temperatures, increased salinity conditions etc. The level of ROS or the level of NADH can be determined using the methods known in the art, including those described in the Examples. Increased stress tolerance of plants, can also be analyzed using the methods to determine the mitochondrial electron flow as described in WO97/06267 or WO02/066972.

Although not intending to limit the invention to a particular mode of action, it is expected that metabolites of the neonicotinoids, particularly of neonicotinoid compounds which comprise a chloropyridine side chain, feed into the NAD salvage pathway and result in higher yields of NAD levels. In this light, it was not expected that application of such compounds on plants engineered to be stress resistant would have any effect, as NAD levels under stress conditions in such plant cells were already significantly higher than in plant cells not engineered to be stress resistant.

The method of the current invention to increase stress resistance by applying neonicotinoid compounds on plant or plant cells may be suitable for any plant engineered to be stress resistant, both dicotyledonous and monocotyledonous plant cells and plants including but not limited to cotton, Brassica vegetables, oilseed rape, wheat, corn or maize, barley, sunflowers, rice, oats, sugarcane, soybean, vegetables (including chicory, lettuce, tomato), tobacco, potato, sugarbeet, papaya, pineapple, mango, *Arabidopsis thaliana,* but also plants used in horticulture, floriculture or forestry, cereal plants including wheat, oat, barley, rye, rice, turfgrass, sorghum, millet or sugarcane plants. The methods of the invention can also be applied to any plant including but not limited to cotton, tobacco, canola, oilseed rape, soybean, vegetables, potatoes, Lemna spp., Nicotiana spp., sweet potatoes, Arabidopsis, alfalfa, barley, bean, corn, cotton, flax, pea, rape, rice, rye, safflower, sorghum, soybean, sunflower, tobacco, wheat, asparagus, beet, broccoli, cabbage, carrot, cauliflower, celery, cucumber, eggplant, lettuce, onion, oilseed rape, pepper, potato, pumpkin, radish, spinach, squash, tomato, zucchini, almond, apple, apricot, banana, blackberry, blueberry, cacao, cherry, coconut, cranberry, date, grape, grapefruit, guava, kiwi, lemon, lime, mango, melon, nectarine, orange, papaya, passion fruit, peach, peanut, pear, pineapple, pistachio, plum, raspberry, strawberry, tangerine, walnut and watermelon.

As used herein "comprising" is to be interpreted as specifying the presence of the stated features, integers, steps or components as referred to, but does not preclude the presence or addition of one or more features, integers, steps or components, or groups thereof. Thus, e.g., a nucleic acid or protein comprising a sequence of nucleotides or amino acids, may comprise more nucleotides or amino acids than the actually cited ones, i.e., be embedded in a larger nucleic acid or protein. An exogenous gene comprising a DNA region which is functionally or structurally defined, may comprise additional DNA regions etc.

Unless stated otherwise in the Examples, all recombinant DNA techniques are carried out according to standard protocols as described in Sambrook et al. (1989) Molecular Cloning: A Laboratory Manual, Second Edition, Cold Spring Harbor Laboratory Press, NY and in Volumes 1 and 2 of Ausubel et al. (1994) Current Protocols in Molecular Biology, Current Protocols, USA. Standard materials and methods for plant molecular work are described in Plant Molecular Biology Labfax (1993) by R.D.D. Croy, jointly published by BIOS Scientific Publications Ltd (UK) and Blackwell Scientific Publications, UK. Other references for standard molecular biology techniques include Sambrook and Russell (2001)

Molecular Cloning: A Laboratory Manual, Third Edition, Cold Spring Harbor Laboratory Press, NY, Volumes I and II of Brown (1998) Molecular Biology LabFax, Second Edition, Academic Press (UK). Standard materials and methods for polymerase chain reactions can be found in Dieffenbach and Dveksler (1995) PCR Primer: A Laboratory Manual, Cold Spring Harbor Laboratory Press, and in McPherson at al. (2000) PCR - Basics: From Background to Bench, First Edition, Springer Verlag, Germany.

Throughout the description and Examples, reference is made to the following sequences:

SEQ ID *No. 1: parp*1 coding region from *Arabidopsis thaliana.*

SEQ ID No. 2: *parp*2 coding region from *Arabidopsis thaliana.*

SEQ ID No. 3: *parp*1 coding region 1 from *Zea mays.*

SEQ ID No. 4: *parp*1 coding region 2 from *Zea mays.*

SEQ ID No. 5: *parp*2 coding region from *Zea mays.*

SEQ ID No. 6: parp2 partial coding region from cotton.

SEQ ID No.7: *par*G coding region from *Arabidopsis thaliana.*

SEQ ID No. 8: *par*G coding region from *Solanum tuberosum.*

SEQ ID No. 9: *par*G coding region from *Oryza sativa.*

SEQ ID No. 10: *par*G coding region from *Zea mays.*

SEQ ID No. 11: nucleotide sequence of the nicotinamidase from *Saccharomyces cereviseae (PNC1).*

SEQ ID No. 12:. nucleotide sequence of the nicotinate phosphoribosyltransferase from *Saccharomyces cereviseae (NPT1)* (complement)

SEQ ID No. 13: nucleotide sequence of the nicotinic acid mononucleotide adenyl transferase 1 (NMA 1) from *Saccharomyces cereviseae.*

SEQ ID No. 14: nucleotide sequence of the nicotinic acid mononucleotide adenyl transferase 2 (NMA2) from *Saccharomyces cereviseae.*

SEQ ID No. 15: nucleotide sequence of the NAD synthetase (QNS1) from *Saccharomyces cereviseae..*

SEQ ID No. 16: nucleotide sequence of the nicotinamidase from *Arabidopsis thaliana (isoform 1).*

SEQ ID No. 17:. nucleotide sequence of the nicotinamidase from *Arabidopsis thaliana (isoform 2)*

SEQ ID No. 18:. nucleotide sequence of the nicotinamidase from *Arabidopsis thaliana (isoform 3)*

SEQ ID No. 19: nucleotide sequence of the nicotinate phosphoribosyltransferase from *Arabidopsis thaliana (isoform 1).*

SEQ ID No. 20: nucleotide sequence of the nicotinate phosphoribosyltransferase from *Arabidopsis thaliana (isoform 2).*

SEQ ID No. 21: nucleotide sequence of the nicotinic acid mononucleotide adenyl transferase from *Arabidopsis thaliana.*

SEQ ID No. 22: nucleotide sequence of the NAD synthetase from *Arabidopsis thaliana.*

## EXAMPLES

### Example 1: Protocols for measurement of NADH content and superoxide content.

**Intracellular NAD(P)H quantification using a water-soluble tetrazolium salt**

Reference: Jun Nakamura, Shoji Asakura, Susan D. Hester, Gilbert de Murcia, Keith W. Caldecott and James A. Swenberg (2003): Quantitation of intracellular NAD(P)H can monitor an imbalance of DNA single strand break repair in base excision repair deficient cells in real time. Nucleic Acids Research 31(17), e104.

Plant material

Most plant material can be used, e.g. in vitro grown Arabidopsis shoots 14-18 days old but NOT flowering or hypocotyl explants of oilseed rape.

Cell Counting Kit-8 (CCK-8)

Sopachem n.v./Belgium, 72A, Avenue du Laarbeeklaan, 1090 Brussels, Belgium

Contents

5mL bottles containing 5mMol/L WST-8 (tetrazolium salt), 0.2mMol/L 1-Methoxy PMS, 150mMol/L NaCl;

*Reaction solution:* 10mL 25mM K-phosphate buffer pH7.4; 0.5mL CCK-8; 0.1mM 1-Methoxy-5-methylphenazinium methyl sulfate (= 1-Methoxyphenazine methosulfate): 1μL/mL of 100mM stock (MW= 336.4; 100mg in 2.973mL water); 1 drop Tween20/25mL

Procedure

Harvest plant material and put in 25mM K-phosphate buffer pH7.4 (e.g.: 150 oilseed rape hypocotyl explants or 1gr Arabidopsis shoots (without roots)). Replace buffer with reaction solution (15mL for 1gr Arabidopsis shoots or 15mL for 150 oilseed rape hypocotyl explants). Incubate at 26°C in the dark for about 1/2 hour (follow reaction). Measure the absorbance of the reaction solution at 450nm.

**Measuring superoxide production by quantifying the reduction of XTT**

Reference: De Block, M., De Brouwer, D. (2002) A simple and robust in vitro assay to quantify the vigour of oilseed rape lines and hybrids. Plant Physiol. Biochem. 40, 845-852

***A. Brassica napus***

Media and reaction buffers

*Sowing medium (medium 201):* Half concentrated Murashige and Skoog salts; 2% sucrose, pH 5.8; 0.6% agar (Difco Bacto Agar); 250mg/l triacillin.

*Callus inducing medium A2S3:* MS medium, 0.5g/l Mes (pH 5.8), 3% sucrose, 40mg/l adenine-$SO_4$, 0.5% agarose, 1mg/l 2,4-D, 0.25mg/l NAA, 1mg/l BAP, 250mg/l triacillin.

Reaction buffer: 25mM K-phosphate buffer pH 8; 1mM sodium,3'-{1-[phenylamino-carbonyl]-3,4-tetrazolium}-bis(4-methoxy-6-nitro) = XTT (BioVectra, Canada) (MW 674.53). Dissolve XTT by careful warming solution (± 37°C) (cool down to room temperature before use). 1 drop Tween20 for 25ml buffer

**Sterilization of seeds - pregermination of seeds - growing of the seedlings**

Seeds are soaked in 70% ethanol for 2 min, then surface-sterilized for 15 min in a sodium hypochlorite solution (with about 6% active chlorine) containing 0.1% Tween20. Finally, the seeds are rinsed with 11 of sterile tap water. Incubate seeds for at least one hour in sterile tap water (to allow diffusion from seeds of components that may inhibit

germination). Seeds are put in 250ml erlenmeyer flasks containing 50ml of sterile tap water (+ 250mg/l triacillin). Shake for about 20 hours. Seeds from which the radicle is protruded are put in Vitro Vent containers from Duchefa containing about 125ml of sowing medium (10 seeds/vessel, not too many to reduce loss of seed by contamination). The seeds are germinated at ±24°C and 10-30μEinstein $s^{-1}m^{-2}$ with a daylength of 16h. For calculating the amount of seeds that have to be sawn: 5 hypocytyl segments/seedling.

**Preculture of the hypocotyl explants and induction of stress**

12-14 days after sowing, the hypocotyls are cut in about 7-10mm segments. The hypocotyl explants (25 hypocotyls/Optilux Petridish, Falcon S1005, Denmark) are cultured for 5 days on medium A2S3 at 25°C (at 10-30μEinstein $s^{-1}m^{-2}$). 150 hypocotyl explants are used per condition.

Induction of stress

Transfer hypocotyl explants to A2S3 medium containing respectively 0, 25 and 50mg/l acetylsalicylic acid. Incubate for about 24 hours at 25°C and10-30μEinstein $s^{-1}m^{-2}$ with a daylength of 16h.

XTT-assay

Transfer 150 hypocotyl explants to a 50ml Falcon tube. Wash with reaction buffer (without XTT). Add 20mL reaction buffer + XTT. Explants have to be submerged, but do not vacuum infiltrate. Incubate in the dark at 26°C. Follow the reaction by measuring the absorption of the reaction medium at 470 nm.

**B. *Arabidopsis thaliana***

Media and reaction buffers

*Plant medium:* Half concentrated Murashige and Skoog salts; B5 vitamins; 1.5% sucrose; pH 5.8; 0.7% Difco agar.

*Incubation medium:* 1/2 concentrated MS-salts; 1% sucrose ; 0.5g/L MES pH 5.8 ; 1 drop Tween20 for 25ml medium.

*Reaction buffer:* 25mM K-phosphate buffer pH 8; 1mM sodium,3'-{1-[phenylamino-carbonyl]-3,4-tetrazolium}-bis(4-methoxy-6-nitro) = XTT (BioVectra, Canada) (MW 674.53). Dissolve XTT by careful warming solution (± 37°C) (cool down to room temperature before use).l drop Tween20 for 25ml buffer.

*Arabidopsis* plants

*Arabidopsis lines*: control (mother line from which tested lines were derived); lines to test.

*Sterilization of Arabidopsis seeds*: 2min. 70% ethanol; 10 min. bleach (6% active chlorine) + 1drop Tween 20 for 20ml solution; wash 5 times with sterile tap water; sterilization is done in 2ml eppendorf tubes. *Arabidopsis* seeds sink to the bottom of the tube, allowing removal of the liquids by means of a 1 ml pipetman.

*Pregermination of seeds*: In 9cm Optilux Petridishes (Falcon) containing 12ml sterile tap water. Low light overnight to 24 hours.

*Growing of Arabidopsis plants:* Seeds are sown in Intergrid Tissue Culture disks of Falcon (nr. 3025) containing ±125ml of plant medium: 1 seed/grid. Plants are grown at 24°C. 30μEinstein $s^{-1}m^{-2}$. 16hours light - 8hours dark for about 18 days (before bolting). 1g of plant material (shoots without roots)/line/condition are needed to carry out the asssay. 1g shoots corresponds wilth 40-60 plants.

Induction of stress

*Paraquat:* Harvest *Arabidopsis* shoots (without roots). Put 1g shoots in incubation medium (shoots have to be submerged, but do not vacuum infiltrate) containing respectively 0, 5 and 10μM paraquat. Incubation medium: ±150ml in Intergrid Tissue Culture disks of Falcon (nr. 3025). Incubate at 24°C in the dark for ±24 hours and 30-50μEinstein $s^{-1}m^{-2}$ with a daylength of 16h.

*High light:*_Transfer half of the plates to high light (250μEinstein $s^{-1}m^{-2}$) and incubate for 4 to 20 hours.

XTT-assay

Harvest shoots (without roots) from agar plates (high light stress) or from liquid incubation medium (paraquat stress) and put them in 50ml Falcon tubes containing reaction buffer (without XTT). Replace reaction buffer with buffer containing XTT (15mL/gr). Shoots have to be submerged, but do not vacuum infiltrate. Incubate in the dark at 26°C. Follow the reaction by measuring the absorption of the reaction medium at 470nm (about one hour).

**Example 2: Analysis of stress tolerance after application of neonicotinoid compounds on plants comprising a transgenic gene which increases stress tolerance.**

Brassica plants comprising a transgenic gene encoding a dsRNA molecule which is capable of reducing endogenous PARP genes, as described in WO 00/04173 A1, (e.g. in Example 8) are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic Brassica plants treated with the chemical compounds survive stress conditions better than untreated transgenic control plants. The level of ROS is lower in the treated transgenic Brassica plants than in the untreated transgenic Brassica plants, while the level of NAD or ATP is higher.

Corn plants comprising a transgenic gene encoding a dsRNA molecule which is capable of reducing endogenous PARP genes, as described in WO 00/04173 A1, are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof.

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic corn plants treated with the chemical compounds survive stress conditions better than untreated transgenic control plants. The level of ROS is lower in the treated transgenic corn plants than in the untreated transgenic corn plants, while the level of NAD or ATP is higher.

Cotton plants comprising a transgenic gene encoding a dsRNA molecule which is capable of reducing endogenous PARP genes, as described in EP 04077984.5 are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic cotton plants treated with the chemical compounds survive stress conditions better than untreated transgenic control plants. The level of ROS is lower in the treated transgenic cotton plants than in the untreated transgenic cotton plants, while the level of NAD or ATP is higher.

Brassica or rice plants comprising a transgenic gene encoding a dsRNA molecule which is capable of reducing endogenous PARG genes, as described in WO2004/090140 are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The level of reactive oxygen species, NAD and ATP are determined and compared to the control plants.

Transgenic Brassica or rice plants treated with the chemical compounds survive stress conditions better than untreated transgenic control plants. The level of ROS is lower in the treated transgenic Brassica or rice plants than in the untreated transgenic Brassica or rice plants, while the level of NAD or ATP is higher.

Arabidopsis plants comprising a transgenic gene encoding a plant functional enzyme involved in the NAD salvage pathway, as described in EP0477624.7 are treated with various concentrations of Imidacloprid, Clothianidin, Thiamethoxam, Acetamiprid, Nitenpyram, Dinotefuran, 6-chloronicotinic acid and Thiachloprid and subjected to various stress conditions, particularly high-low temperature, high light intensities or drought stress or any combination thereof

After treatment, the plants are visually scored for survival and damage as compared to untreated transgenic control plants, and to non-transgenic isogenic plants treated with the mentioned compounds in a similar manner. The

level of reactive oxygen species, NAD and ATP are determined and compared to the control plants.

Transgenic Arabidopsis plants treated with the chemical compounds survive stress conditions better than untreated transgenic control plants. The level of ROS is lower in the treated transgenic Arabidopsis plants than in the untreated transgenic Arabidopsis plants, while the level of NAD or ATP is higher.

## Claims

1. A method for increasing stress tolerance in a plant, comprising applying an effective amount of 6-chloronicotinic acid or a compound of formula (I)

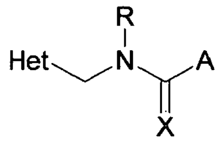

(I)

wherein

Het represents a heterocycle which is in each case optionally mono- or polysubstituted by fluorine, chlorine, methyl or ethyl, which heterocycle is selected from the following group of heterocycles:
pyrid-3-yl, pyrid-5-yl, 3-pyridinio, 1-oxido-5-pyridinio, 1-oxido-5-pyridinio, tetra-hydrofuran-3-yl, thiazol-5-yl,
A represents $C_1$-$C_6$-alkyl, -N($R^1$)($R^2$) or S($R^2$),
in which

$R^1$ represents hydrogen, $C_1$-$C_6$-alkyl, phenyl-$C_1$-$C_4$-alkyl, $C_3$-$C_6$-cycloalkyl, $C_2$-$C_6$-alkenyl or $C_2$-$C_6$-alkynyl, and
$R^2$ represents $C_1$-$C_6$-alkyl, $C_2$-$C_6$-alkenyl, $C_2$-$C_6$-alkynyl, -C(=O)-$CH_3$ or benzyl,

R represents hydrogen, $C_1$-$C_6$-alkyl, $C_2$-$C_6$-alkenyl, $C_2$-$C_6$-alkynyl, -C(=O)-$CH_3$ or benzyl or together with $R^2$ represents the groups below:
$-CH_2-CH_2-$, $-CH_2-CH_2-CH_2-$, $-CH_2-O-CH_2-$, $-CH_2-S-CH_2-$, $-CH_2-NH-CH_2-$, $-CH_2-N(CH_3)-CH_2-$, and
X represents $N-NO_2$, N-CN or $CH-NO_2$

on said plant or on its locus, or on seeds of said plant, **characterized in that** said plant is a plant engineered to be stress tolerant.

2. The method according to claim 1, wherein said plant engineered to be stress tolerant is a transgenic plant comprising an exogenous gene which increases stress tolerance.

3. The method according to claim 2, wherein said exogenous gene codes for a PARP inhibitory RNA molecule.

4. The method according to claim 3, wherein said exogenous gene comprises the following operably linked DNA fragments:

a. a plant expressible promoter;
b. a DNA region coding for a PARP inhibitory RNA molecule comprising at least 19 out of 20 consecutive nucleotides selected from the nucleotide sequence of SEQ ID No 1, the nucleotide sequence of SEQ ID No 2, the nucleotide sequence of SEQ ID No 3, the nucleotide sequence of SEQ ID No 4, the nucleotide sequence of SEQ ID No 5 or the nucleotide sequence of SEQ ID No 6; and
c. a transcription termination and polyadenylation DNA region.

5. The method according to claim 3, wherein said exogenous gene comprises the following operably linked DNA fragments:

a. a plant expressible promoter;
b. a DNA region coding for a PARP inhibitory RNA molecule comprising at least 19 out of 20 consecutive nucleotides selected from the complement of the nucleotide sequence of SEQ ID No 1, the nucleotide sequence of SEQ ID No 2, the nucleotide sequence of SEQ ID No 3, the nucleotide sequence of SEQ ID No 4, the nucleotide sequence of SEQ ID No 5 or the nucleotide sequence of SEQ ID No 6; and
c. a transcription termination and polyadenylation DNA region.

**6.** The method according to claim 3, wherein said exogenous gene comprises the following operably linked DNA fragments:

a. a plant expressible promoter;
b. a DNA region coding for a PARP inhibitory RNA molecule, said RNA molecule comprising:

i. a sense nucleotide sequence comprising at least 19 out of 20 consecutive nucleotides selected from the nucleotide sequence of SEQ ID No 1, the nucleotide sequence of SEQ ID No 2, the nucleotide sequence of SEQ ID No 3, the nucleotide sequence of SEQ ID No 4, the nucleotide sequence of SEQ ID No 5 or the nucleotide sequence of SEQ ID No 6; and
ii. an antisense nucleotide sequence comprising a nucleotide sequence complementary to said at least 20 consecutive nucleotides in said sense nucleotide sequence
iii. wherein said sense and antisense nucleotide sequence are capable of forming a double stranded RNA region; and

c. a transcription termination and polyadenylation DNA region.

**7.** The method according to claim 6, wherein said antisense nucleotide sequence has about 95% sequence identity or is identical to said sense nucleotide sequence.

**8.** The method according to claim 2, wherein said exogenous gene codes for a ParG inhibitory RNA molecule.

**9.** The method according to claim 8, wherein said exogenous gene comprises the following operably linked DNA fragments:

a. a plant expressible promoter;
b. a DNA region coding for a PARG inhibitory RNA molecule comprising at least 19 out of 20 consecutive nucleotides selected from the nucleotide sequence of SEQ ID No 7, the nucleotide sequence of SEQ ID No 8, the nucleotide sequence of SEQ ID No 9 or the nucleotide sequence of SEQ ID No 10; and
c. a transcription termination and polyadenylation DNA region.

**10.** The method according to claim 3, wherein said exogenous gene comprises the following operably linked DNA fragments:

a. a plant expressible promoter;
b. a DNA region coding for a PARG inhibitory RNA molecule comprising at least 19 out of 20 consecutive nucleotides selected from the nucleotide sequence of SEQ ID No 7, the nucleotide sequence of SEQ ID No 8, the nucleotide sequence of SEQ ID No 9 or the nucleotide sequence of SEQ ID No 10;; and
c. a transcription termination and polyadenylation DNA region.

**11.** The method according to claim 3, wherein said exogenous gene comprises the following operably linked DNA fragments:

a. a plant expressible promoter;
b. a DNA region coding for a PARG inhibitory RNA molecule, said RNA molecule comprising:

i. a sense nucleotide sequence comprising at least 19 out of 20 consecutive nucleotides selected from the nucleotide sequence of SEQ ID No 7, the nucleotide sequence of SEQ ID No 8, the nucleotide sequence of SEQ ID No 9 or the nucleotide sequence of SEQ ID No 10; and
ii. an antisense nucleotide sequence comprising a nucleotide sequence complementary to said at least 20 consecutive nucleotides in said sense nucleotide sequence
iii. wherein said sense and antisense nucleotide sequence are capable of forming a double stranded RNA region; and

c. a transcription termination and polyadenylation DNA region.

**12.** The method according to claim 11, wherein said antisense nucleotide sequence has about 95% sequence identity or is identical to said sense nucleotide sequence.

**13.** The method according to claim 2, wherein said exogenous gene codes for a for a plant-functional enzyme of the nicotinamide adenine dinucleotide salvage synthesis pathway selected from nicotinamidase, nicotinate phosphoribosyltransferase, nicotinic acid mononucleotide adenyl transferase or nicotinamide adenine dinucleotide synthetase.

**14.** The method according to claim 13 , wherein said exogenous gene comprises a nucleotide sequence selected from the nucleotide sequence of SEQ ID 11, the nucleotide sequence of SEQ ID 12, the nucleotide sequence of SEQ ID 13, the nucleotide sequence of SEQ ID 14, the nucleotide sequence of SEQ ID 15, the nucleotide sequence of SEQ ID 16, the nucleotide sequence of SEQ ID 17, the nucleotide sequence of SEQ ID 18, the nucleotide sequence of SEQ ID 19, the nucleotide sequence of SEQ ID 20, the nucleotide sequence of SEQ ID 21 or the nucleotide sequence of SEQ ID 22.

**15.** The method of anyone of claims 1 to 14 wherein said compound selected from the class of neonicotinoids is imidacloprid.

**16.** The method of anyone of claims 1 to 14 wherein said compound selected from the class of neonicotinoids is clothianidin.

**17.** The method of anyone of claims 1 to 14 wherein said compound selected from the class of neonicotinoids is thiacloprid.

**18.** The method of anyone of claims 1 to 14 wherein said compound selected from the class of neonicotinoids is nitenpyram.

**19.** The method of anyone of claims 1 to 14 wherein said compound selected from the class of neonicotinoids is acetamiprid.

**20.** The method of anyone of claims 1 to 14 wherein said compound is 6-chloronicotinic acid.

**21.** The use of a compound in accordance with claim 1 for increasing stress tolerance of a plant engineered to be stress tolerant according to anyone of claims 2 to 14.

**22.** A seed of a plant engineered to be stress tolerant according to anyone of claims 2 to 14 which has been treated with a compound according to claim 1.

**23.** A method for increasing stress tolerance in a plant, comprising treating the soil in which a the seed of a plant engineered to be stress tolerant in accordance with anyone of claims 2 to 14 is planted with an effective amount of 6-chloronicotinic acid or a compound of formula (I) according to claim 1

**24.** A method according to claim 1, wherein the plant is said transgenic stress tolerant dicotyledonous or monocotyledonous plant, plant cell or seed thereof.

**25.** A method according to claim 1, wherein the seed is treated with an amount of a compound according to claim 1 from 0,1 g/100kg of seed to 1000 g/100kg of seed.

**26.** A method according to claim 1, wherein the plant is treated with an application rate from 10 g to 1600 g per hectare of a compound according to claim 1.

**27.** A package comprising at least

a. a chemical compound according to claim 1, and
b. a plant engineered to be stress tolerant or a seed of said plant according to anyone of claims 2 to 14.

European Patent Office

# EUROPEAN SEARCH REPORT

Application Number
EP 05 01 2090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/09830 A (RHONE-POULENC AGRO) 4 March 1999 (1999-03-04) * examples 5,6 * ----- | 22 | A01N51/00 A01N47/40 A01N43/40 |
| X | WO 02/28184 A (MONSANTO TECHNOLOGY, LLC; ASRAR, JAWED; KOHN, FRANK, C; SANDERS, ERNES) 11 April 2002 (2002-04-11) * abstract * * page 15, line 3 - line 11 * * claim 15 * ----- | 22 | |
| X,D | WO 03/096811 A (MONSANTO TECHNOLOGY, LLC; ASRAR, JAWED; SANDERS, ERNEST, F; KOHN, FRAN) 27 November 2003 (2003-11-27) * paragraph [0029] - paragraph [0030] * * paragraph [0081] * ----- | 22 | |
| A,D | WO 01/26468 A (SYNGENTA PARTICIPATIONS AG; SENN, ROBERT; HOFER, DIETER; THIEME, THOMA) 19 April 2001 (2001-04-19) * abstract * ----- | 1-27 | TECHNICAL FIELDS SEARCHED (IPC) |
| A,D | WO 97/06267 A (PLANT GENETIC SYSTEMS, N.V; DE BLOCK, MARC) 20 February 1997 (1997-02-20) * page 6, line 4 - line 23 * ----- | 1-27 | A01N |

The present search report has been drawn up for all claims

1

| Place of search | Date of completion of the search | Examiner |
|---|---|---|
| Munich | 16 November 2005 | Molina de Alba, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 01 2090

This annex lists the patent family members relating to the patent documents cited in the above-mentioned European search report. The members are as contained in the European Patent Office EDP file on
The European Patent Office is in no way liable for these particulars which are merely given for the purpose of information.

16-11-2005

| Patent document cited in search report | | Publication date | Patent family member(s) | | | Publication date |
|---|---|---|---|---|---|---|
| WO 9909830 | A | 04-03-1999 | AT | 245353 | T | 15-08-2003 |
| | | | AU | 742192 | B2 | 20-12-2001 |
| | | | AU | 1225299 | A | 16-03-1999 |
| | | | BR | 9811344 | A | 05-02-2002 |
| | | | DE | 69816622 | D1 | 28-08-2003 |
| | | | EP | 1005272 | A1 | 07-06-2000 |
| | | | TR | 200000483 | T2 | 21-08-2000 |
| WO 0228184 | A | 11-04-2002 | AU | 1462702 | A | 15-04-2002 |
| | | | BR | 0114465 | A | 13-01-2004 |
| | | | CA | 2424253 | A1 | 11-04-2002 |
| | | | CN | 1479574 | A | 03-03-2004 |
| | | | EP | 1322164 | A1 | 02-07-2003 |
| | | | HU | 0301286 | A2 | 29-09-2003 |
| | | | MX | PA03003075 | A | 14-07-2003 |
| | | | NZ | 525209 | A | 30-07-2004 |
| | | | US | 2002142916 | A1 | 03-10-2002 |
| WO 03096811 | A | 27-11-2003 | AU | 2003241451 | A1 | 02-12-2003 |
| | | | BR | 0311183 | A | 01-03-2005 |
| | | | CA | 2483690 | A1 | 27-11-2003 |
| | | | EP | 1503624 | A1 | 09-02-2005 |
| | | | US | 2004023801 | A1 | 05-02-2004 |
| | | | US | 2004023802 | A1 | 05-02-2004 |
| WO 0126468 | A | 19-04-2001 | AT | 298506 | T | 15-07-2005 |
| | | | AU | 780305 | B2 | 17-03-2005 |
| | | | AU | 2834301 | A | 23-04-2001 |
| | | | BR | 0014763 | A | 11-06-2002 |
| | | | DE | 60021100 | D1 | 04-08-2005 |
| | | | DK | 1227726 | T3 | 31-10-2005 |
| | | | EG | 22688 | A | 30-06-2003 |
| | | | EP | 1227726 | A2 | 07-08-2002 |
| | | | JP | 2003527329 | T | 16-09-2003 |
| | | | US | 6753296 | B1 | 22-06-2004 |
| | | | ZA | 200202843 | A | 17-11-2003 |
| WO 9706267 | A | 20-02-1997 | AU | 710740 | B2 | 30-09-1999 |
| | | | AU | 6739896 | A | 05-03-1997 |
| | | | CA | 2200496 | A1 | 20-02-1997 |
| | | | EP | 0757102 | A1 | 05-02-1997 |
| | | | JP | 11500627 | T | 19-01-1999 |
| | | | US | 6074876 | A | 13-06-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0004173 A1
- EP 2004003995 W
- EP 04077624 A
- WO 0126468 A2
- WO 03096811 A1
- EP 192606 A1
- EP 580533 A2
- EP 376279 A2
- EP 235725 A2
- EP 0192060 A1
- WO 9104965 A1
- EP 0235725 A2
- EP 0302389 A2
- EP 0376279 A2
- EP 0580553 A2
- EP 0649845 A1
- EP 04077984 A
- WO 0001133 A1
- WO 9953050 A1
- WO 02059294 A1
- WO 0004173 A
- WO 2004090140 A
- WO 2004090140 A2
- WO 9706267 A
- WO 02066972 A
- EP 0477624 A


### Non-patent literature cited in the description


- The Pesticide Manual. British Crop Protection Council, 2003
- **PANDA et al.** *Dev. Cell,* 2002, vol. 3, 51-61
- **SAMBROOK et al.** Molecular Cloning: A Laboratory Manual. Cold Spring Harbor Laboratory Press, 1989
- **AUSUBEL et al.** Current Protocols in Molecular Biology, Current Protocols. 1994, vol. 1 and 2
- **R.D.D. CROY.** Plant Molecular Biology Labfax. BIOS Scientific Publications Ltd (UK) and Blackwell Scientific Publications, 1993
- **SAMBROOK ; RUSSELL.** Molecular Cloning: A Laboratory Manual. Cold Spring Harbor Laboratory Press, 2001
- **BROWN.** Molecular Biology LabFax. Academic Press, 1998, vol. I and II
- **DIEFFENBACH ; DVEKSLER.** PCR Primer: A Laboratory Manual. Cold Spring Harbor Laboratory Press, 1995
- **MCPHERSON.** PCR - Basics: From Background to Bench. Springer Verlag, 2000
- **JUN NAKAMURA ; SHOJI ASAKURA ; SUSAN D. HESTER ; GILBERT DE MURCIA ; KEITH W. CALDECOTT ; JAMES A. SWENBERG.** Quantitation of intracellular NAD(P)H can monitor an imbalance of DNA single strand break repair in base excision repair deficient cells in real time. *Nucleic Acids Research,* 2003, vol. 31 (17), e104
- **DE BLOCK, M. ; DE BROUWER, D.** A simple and robust in vitro assay to quantify the vigour of oilseed rape lines and hybrids. *Plant Physiol. Biochem.,* 2002, vol. 40, 845-852

SEQUENCE LISTING

<110> Bayer CropScience AG

<120> INCREASE OF STRESS TOLERANCE BY APPLICATION OF NEONICOTINOIDS ON PLANTS ENGINEERED TO BE STRESS TOLERANT

<130> BCS 04-3083

<160> 22

<170> PatentIn version 3.0

<210> 1

<211> 3187

<212> DNA

<213> Artificial

<220>

<223> parp1 coding region from Arabidopsis thaliana

<220>

<221> misc_feature

<222> (11)..(2962)

<223> open reading frame

<400> 1
taccggagaa atggcaagcc cacataagcc gtggagggcg gagtatgcaa agtcgtcgag 60

gtcttcatgt aaaacttgca agtccgtcat taacaaggag aactttcgtc ttggaaagtt 120

ggttcaatct actcacttcg atggcatcat gcccatgtgg aaccatgctt cttgtatact 180

gaagaagacg aagcagataa aatcagttga tgatgttgaa ggcatagaat cacttcgttg 240

ggaagatcag caaaagatta gaaaatatgt cgaatctgga gcagggagta acacaagcac 300

aagcacaggc acaagcacga gcagtaccgc taataatgcc aaactagaat atgggattga 360

agtgtcacaa acttcccgtg ccggttgcag aaagtgtagc gaaaagatct tgaaaggaga 420

ggtacgtata ttctccaagc ctgaaggccc gggtaacaaa ggtttgatgt ggcatcacgc 480

taaatgtttc cttgaaatgt cttcctctac tgaactggaa agtttgtctg gatggagaag 540

tataccagac tcagaccaag aagctcttct tcccttagtg aagaaagctc tgccggcagc 600

caaaactgag acagcagaag cacgtcaaac aaattcaaga gcaggcacaa aacgaaaaaa 660

tgattctgtt gataacgaga agtcgaaact agcaaaaagt agttttgaca tgtctacaag 720

tggtgcttta caaccttgta gcaaagaaaa ggaaatggag gcccaaacta aggaattgtg 780

ggacctgaag gatgatctga aaaaatatgt aacatcagct gagttgcggg aaatgcttga 840

agtaaatgaa caaagtacaa gaggatctga acttgatctg cgtgataaat gtgctgatgg 900

catgatgttt ggcccactcg ctctctgccc aatgtgctct gggcatcttt ctttctccgg 960
aggactttac cgatgccatg gatacatctc agaatggagc aaatgttctc attccacttt 1020
ggatccagac cgcatcaaag ggaagtggaa aatccctgac gaaacagaaa atcaattcct 1080
tctgaagtgg aataagtctc aaaagagtgt gaagccaaaa cgtattctgc gtcctgtatt 1140
gtctggcgag acatctcagg gtcaaggttc taaagatgca actgactcct caaggagtga 1200
aaggctagca gatcttaaag tttcaattgc tggaaatact aaggaaaggc aaccatggaa 1260
gaagagaatt gaggaagctg gtgcagagtt tcatgctaat gttaaaaaag gtacaagctg 1320
tttggttgtt tgtggactga cagatatcag agacgctgaa atgagaaagg caaggaggat 1380
gaaagtggca atcgtgagag aggattattt ggttgattgt tttaaaaaac agaggaaact 1440
tccatttgac aagtacaaaa ttgaagacac tagtgagagc cttgtcactg ttaaagtaaa 1500
aggacgaagc gctgtgcatg aagcgtctgg cctccaagag cactgtcaca ttcttgaaga 1560
tgggaacagt atctataaca caactctgag catgtctgat ctctctaccg gtatcaatag 1620
ttattacata ctccagataa tccaagaaga taaaggttca gattgttacg tatttcgtaa 1680
atggggccga gttggaaatg aaaagattgg tggtaacaaa gtggaggaaa tgtcaaagtc 1740
tgatgcggtt cacgaattca aacgtctatt tcttgaaaaa accggaaaca catgggaatc 1800
ttgggaacaa aaaacgaatt tccagaaaca acctggaaaa tttctcccgt tggacattga 1860
ttatggagtt aataagcaag tagccaaaaa agagccattt cagaccagta gcaaccttgc 1920
tccatcatta atagaattga tgaagatgct tttgatgtg gaaacttaca gatctgcaat 1980
gatggagttc gagataaata tgtcagagat gccacttggg aagctcagca aacataatat 2040
acagaagggt tttgaggcat tgacggagat acagaggcta ttgactgaaa gcgaccccca 2100
gcctactatg aaagaaagct tgcttgttga tgctagtaac agatttttta ccatgatccc 2160
ttctattcat cctcatatta tccgagatga agatgacttt aagtcaaagg tgaaaatgct 2220
cgaggctctg caggatatcg aaatagcttc aagaatagtt ggctttgatg ttgatagcac 2280
cgaatctctt gatgataagt ataagaagct gcattgcgat atctcaccac ttcctcatga 2340
tagcgaagat tatcgattaa tcgagaagta tcttaacaca actcatgccc caacgcatac 2400
agagtggagt cttgagctag aggaagtttt tgctcttgaa agagaaggag agtttgataa 2460
atatgctccc cacagagaaa aacttggcaa taagatgctc ctatggcatg gttctcgatt 2520
aacgaatttt gttggaatat tgaaccaagg actgagaatt gcacctccag aagctcctgc 2580
tactggttac atgtttggaa aagggatata ctttgctgac cttgtcagta aaagtgctca 2640
gtactgctac acttgtaaga aaaatccggt gggtctaatg cttctgagtg aagttgcatt 2700
gggagaaata catgagctaa caaaagctaa gtatatggat aaacctccga gagggaaaca 2760
ctcgaccaaa gggctcggca agaaagtgcc tcaagattcc gagtttgcca agtggagagg 2820
tgatgtgact gttccctgtg gaaaacctgt ttcatcaaag gtcaaggctt ctgagcttat 2880

gtacaatgag tatatcgtct acgatacagc ccaggtgaag ttgcagttct tgttgaaagt 2940
aaggtttaag cacaagagat gagcctgaac caaacaagaa gacgtcactt ctgttaacta 3000
aatgtttttt tgggaaatcg aatccaacac gaagacttaa cttttgtaac taaattgctt 3060
ttgataaatt gaattcaaca tgtagtcaca gatttaactc tctggcgttg tagatgtttc 3120
tggttttaaa agagcgtact ctacattttg ttatgctttt tctcagtaat gacacttctt 3180
aagactt 3187

<210> 2

<211> 2147

<212> DNA

<213> Artificial

<220>

<223> parp2 coding region from Arabidopsis thaliana

<220>

<221> misc_feature

<222> (129)..(2042)

<223> open reading frame

<400> 2
attgatgaag aagaaaacga agaagaagac tcttcaaatg ctcgcgcgaa ctcacttctg 60
acgaaaacca tacttcctca gtctcattcc ctttccgacg aactattctc ctgaagaaga 120
agacgaaaat ggcgaacaag ctcaaagtcg acgaactccg tttaaaactc gccgagcgtg 180
gactcagtac tactggagtc aaagccgttc tggtggagag gcttgaagag gctatcgcag 240
aagacactaa gaaggaagaa tcaaagagca agaggaaaag aaattcttct aatgatactt 300
atgaatcgaa caaattgatt gcaattggcg aatttcgtgg gatgattgtg aaggaattgc 360
gtgaggaagc tattaagaga ggcttagata caacaggaac caaaaaggat cttcttgaga 420
ggctttgcaa tgatgctaat aacgtttcca atgcaccagt caaatccagt aatgggacag 480
atgaagctga agatgacaac aatggctttg aagaagaaaa gaaagaagag aaaatcgtaa 540
ccgcgacaaa gaagggtgca gcggtgctag atcagtggat tcctgatgag ataaagagtc 600
agtaccatgt tctacaaagg ggtgatgatg tttatgatgc tatcttaaat cagacaaatg 660
tcagggataa taataacaag ttctttgtcc tacaagtcct agagtcggat agtaaaaaga 720
catacatggt ttacactaga tggggaagag ttggtgtgaa aggacaaagt aagctagatg 780
ggccttatga ctcatgggat cgtgcgatag agatatttac caataagttc aatgacaaga 840
caaagaatta ttggtctgac agaaaggagt ttatcccaca tcccaagtcc tatacatggc 900
tcgaaatgga ttacggaaaa gaggaaaatg attcaccggt caataatgat attccgagtt 960

catcttccga agttaaacct gaacaatcaa aactagatac tcgggttgcc aagttcatct 1020
ctcttatatg taatgtcagc atgatggcac agcatatgat ggaaatagga tataacgcta 1080
acaaattgcc actcggcaag ataagcaagt ccacaatttc aaagggttat gaagtgctga 1140
agagaatatc ggaggtgatt gaccggtatg atagaacgag gcttgaggaa ctgagtggag 1200
agttctacac agtgatacct catgattttg gttttaagaa aatgagtcag tttgttatag 1260
acactcctca aaagttgaaa cagaaaattg aaatggttga agcattaggt gaaattgaac 1320
tcgcaacaaa gttgttgtcc gtcgacccgg gattgcagga tgatccttta tattatcact 1380
accagcaact taattgtggt ttgacgccag taggaaatga ttcagaggag ttctctatgg 1440
ttgctaatta catggagaac actcatgcaa agacgcattc gggatatacg gttgagattg 1500
cccaactatt tagagcttcg agagctgttg aagctgatcg attccaacag ttttcaagtt 1560
cgaagaacag gatgctactc tggcacggtt cacgtctcac taactgggct ggtattttat 1620
ctcaaggtct gcgaatagct cctcctgaag cgcctgtaac tggttacatg tttggaaaag 1680
gggtttactt tgcggatatg ttctccaaga gtgcgaacta ttgctatgcc aacactggcg 1740
ctaatgatgg cgttctgctc ctctgcgagg ttgctttggg agacatgaat gaacttctgt 1800
attcagatta taacgcggat aatctacccc cgggaaagct aagcacaaaa ggtgtgggga 1860
aaacagcacc aaacccatca gaggctcaaa cactagaaga cggtgttgtt gttccacttg 1920
gcaaaccagt ggaacgttca tgctccaagg ggatgttgtt gtacaacgaa tatatagtct 1980
acaatgtgga acaaatcaag atgcgttatg tgatccaagt caaattcaac tacaagcact 2040
aaaacttatg tatattagct tttgaacatc aactaattat ccaaaaatca gcgttttatt 2100
gtatttcttt caaactcctt catctctgat tttgcacggt tcactcg 2147

<210> 3

<211> 3211

<212> DNA

<213> Artificial

<220>

<223> parp1 coding region 1 from Zea mays

<220>

<221> misc_feature

<222> (113)..(3022)

<223> open reading frame

<400> 3
acctacctga atacgtcatc cctaagtgtt ccgcttcctc tgtcgtccgg cctccaactc 60
catcgaaggg gctagggaga ggagggaacc cgaaccacag caggccggcg caatggcggc 120

```
gccgccaaag gcgtggaagg cggagtatgc caagtctggg cgggcctcgt gcaagtcatg    180
ccggtcccct atcgccaagg accagctccg tcttggcaag atggttcagg cgtcacagtt    240
cgacggcttc atgccgatgt ggaaccatgc cagcgttgac gatgttgaag ggatagatgc    300
acttagatgg gatgatcaag agaagatacg aaactacgtt gggagtgcct cagctggtac    360
aagttctaca gctgctcctc ctgagaaatg tacaattgag attgctccat ctgcccgtac    420
ttcatgtaga cgatgcagtg aaaagattac aaaaggatcg gtccgtcttt cagctaagct    480
tgagagtgaa ggtcccaagg gtataccatg gtatcatgcc aactgtttct ttgaggtatc    540
cccgtctgca actgttgaga agttctcagg ctgggatact ttgtccgatg aggataagag    600
aaccatgctc gatcttgtta aaaaagatgt tggcaacaat gaacaaaata agggttccaa    660
gcgcaagaaa agtgaaaatg atattgatag ctacaaatcc gccaggttag atgaaagtac    720
atctgaaggt acagtgcgaa acaaagggca acttgtagac ccacgtggtt ccaatactag    780
ttcagctgat atccaactaa agcttaagga gcaaagtgac acactttgga agttaaagga    840
tggacttaag actcatgtat cggctgctga attaagggat atgcttgagg ctaatgggca    900
ggatacatca ggaccagaaa ggcacctatt ggatcgctgt gcggatggaa tgatatttgg    960
agcgctgggt ccttgcccag tctgtgctaa tggcatgtac tattataatg gtcagtacca   1020
atgcagtggt aatgtgtcag agtggtccaa gtgtacatac tctgccacag aacctgtccg   1080
cgttaagaag aagtggcaaa ttccacatgg aacaaagaat gattacctta tgaagtggtt   1140
caaatctcaa aaggttaaga aaccagagag ggttcttcca ccaatgtcac ctgagaaatc   1200
tggaagtaaa gcaactcaga gaacatcatt gctgtcttct aaagggttgg ataaattaag   1260
gttttctgtt gtaggacaat caaaagaagc agcaaatgag tggattgaga agctcaaact   1320
tgctggtgcc aacttctatg ccagggttgt caaagatatt gattgtttaa ttgcatgtgg   1380
tgagctcgac aatgaaaatg ctgaagtcag gaaagcaagg aggctgaaga taccaattgt   1440
aagggagggt tacattggag aatgtgttaa aaagaacaaa atgctgccat ttgatttgta   1500
taaactagag aatgccttag agtcctcaaa aggcagtact gtcactgtta aagttaaggg   1560
ccgaagtgct gttcatgagt cctctggttt gcaagatact gctcacattc ttgaagatgg   1620
gaaaagcata tacaatgcaa ccttaaacat gtctgacctg gcactaggtg tgaacagcta   1680
ctatgtactc cagatcattg aacaggatga tgggtctgag tgctacgtat ttcgtaagtg   1740
gggacgggtt gggagtgaga aaattggagg gcaaaaactg gaggagatgt caaaaactga   1800
ggcaatcaag gaattcaaaa gattatttct tgagaagact ggaaactcat gggaagcttg   1860
ggaatgtaaa accaattttc ggaagcagcc tgggagattt tacccacttg atgttgatta   1920
tggtgttaag aaagcaccaa aacggaaaga tatcagtgaa atgaaaagtt ctcttgctcc   1980
tcaattgcta gaactcatga agatgctttt caatgtggag acatatagag ctgctatgat   2040
ggaatttgaa attaatatgt cagaaatgcc tcttgggaag ctaagcaagg aaaatattga   2100
```

gaaaggattt gaagcattaa ctgagataca gaatttattg aaggacaccg ctgatcaagc 2160
actggctgtt agagaaagct taattgttgc tgcgagcaat cgctttttca ctcttatccc 2220
ttctattcat cctcatatta tacgggatga ggatgatttg atgatcaaag cgaaaatgct 2280
tgaagctctg caggatattg aaattgcttc aaagatagtt ggcttcgata gcgacagtga 2340
tgaatctctt gatgataaat atatgaaact tcactgtgac atcaccccgc tggctcacga 2400
tagtgaagat tacaagttaa ttgagcagta tctcctcaac acacatgctc ctactcacaa 2460
ggactggtcg ctggaactgg aggaagtttt ttcacttgat cgagatggag aacttaataa 2520
gtactcaaga tataaaaata atctgcataa caagatgcta ttatggcacg gttcaaggtt 2580
gacgaatttt gtgggaattc ttagtcaagg gctaagaatt gcacctcctg aggcacctgt 2640
tactggctat atgttcggca aaggcctcta ctttgcagat ctagtaagca agagcgcaca 2700
atactgttat gtggatagga ataatcctgt aggtttgatg cttctttctg aggttgcttt 2760
aggagacatg tatgaactaa agaaagccac gtccatggac aaacctccaa gagggaagca 2820
ttcgaccaag ggattaggca aaaccgtgcc actggagtca gagtttgtga agtggaggga 2880

tgatgtcgta gttccctgcg gcaagccggt gccatcatca attaggagct ctgaactcat 2940
gtacaatgag tacatcgtct acaacacatc ccaggtgaag atgcagttct tgctgaaggt 3000
gcgtttccat cacaagaggt agctgggaga ctaggcaagt agagttggaa ggtagagaag 3060
cagagttagg cgatgcctct tttggtatta ttagtaagcc tggcatgtat ttatgggtgc 3120
tcgcgcttga tccattttgg taagtgttgc ttgggcatca gcgcgaatag caccaatcac 3180
acacttttac ctaatgacgt tttactgtat a 3211

<210> 4
<211> 3212
<212> DNA
<213> Artificial
<220>
<223> parp1 coding region 2 from Zea mays
<220>
<221> misc_feature
<222> (81)..(3020)
<223> open reading frame
<400> 4
gcttcctctg tcgtccggcc tccaactcca tcgaaggggc tagggagagg agggaacccg 60
aaccacagca ggccggcgca atggcggcgc cgccaaaggc gtggaaggcg gagtatgcca 120

agtctgggcg ggcctcgtgc aagtcatgcc ggtcccctat cgccaaggac cagctccgtc 180
ttggcaagat ggttcaggcg tcacagttcg acggcttcat gccgatgtgg aaccatgcca 240
ggtgcatctt cagcaagaag aaccagataa aatccgttga cgatgttgaa gggatagatg 300
cacttagatg ggatgatcaa gagaagatac gaaactacgt tgggagtgcc tcagctggta 360
caagttctac agctgctcct cctgagaaat gtacaattga gattgctcca tctgcccgta 420
cttcatgtag acgatgcagt gaaaagatta caaaaggatc ggtccgtctt tcagctaagc 480
ttgagagtga aggtcccaag ggtataccat ggtatcatgc caactgtttc tttgaggtat 540
ccccgtctgc aactgttgag aagttctcag gctgggatac tttgtccgat gaggataaga 600
gaaccatgct cgatcttgtt aaaaaagatg ttggcaacaa tgaacaaaat aagggttcca 660
agcgcaagaa aagtgaaaat gatattgata gctacaaatc cgccaggtta gatgaaagta 720
catctgaagg tacagtgcga aacaaagggc aacttgtaga cccacgtggt tccaatacta 780
gttcagctga tatccaacta aagcttaagg agcaaagtga cacactttgg aagttaaagg 840
atggacttaa gactcatgta tcggctgctg aattaaggga tatgcttgag gctaatgggc 900
aggatacatc aggaccagaa aggcacctat tggatcgctg tgcggatgga atgatatttg 960
gagcgctggg tccttgccca gtctgtgcta atggcatgta ctattataat ggtcagtacc 1020
aatgcagtgg taatgtgtca gagtggtcca agtgtacata ctctgccaca gaacctgtcc 1080
gcgttaagaa gaagtggcaa attccacatg gaacaaagaa tgattacctt atgaagtggt 1140
tcaaatctca aaaggttaag aaaccagaga gggttcttcc accaatgtca cctgagaaat 1200
ctggaagtaa agcaactcag agaacatcat tgctgtcttc taaagggttg gataaattaa 1260
ggttttctgt tgtaggacaa tcaaaagaag cagcaaatga gtggattgag aagctcaaac 1320
ttgctggtgc caacttctat gccagggttg tcaaagatat tgattgttta attgcatgtg 1380
gtgagctcga caatgaaaat gctgaagtca ggaaagcaag gaggctgaag ataccaattg 1440
taagggaggg ttacattgga gaatgtgtta aaaagaacaa aatgctgcca tttgatttgt 1500
ataaactaga gaatgcctta gagtcctcaa aaggcagtac tgtcactgtt aaagttaagg 1560
gccgaagtgc tgttcatgag tcctctggtt tgcaagatac tgctcacatt cttgaagatg 1620
ggaaaagcat atacaatgca accttaaaca tgtctgacct ggcactaggt gtgaacagct 1680
actatgtact ccagatcatt gaacaggatg atgggtctga gtgctacgta tttcgtaagt 1740
ggggacgggt tgggagtgag aaaattggag ggcaaaaact ggaggagatg tcaaaaactg 1800
aggcaatcaa ggaattcaaa agattatttc ttgagaagac tggaaactca tgggaagctt 1860
gggaatgtaa aaccaatttt cggaagcagc ctgggagatt ttacccactt gatgttgatt 1920
atggtgttaa gaaagcacca aaacggaaag atatcagtga aatgaaaagt tctcttgctc 1980
ctcaattgct agaactcatg aagatgcttt tcaatgtgga gacatataga gctgctatga 2040
tggaatttga aattaatatg tcagaaatgc ctcttgggaa gctaagcaag gaaaatattg 2100

agaaaggatt tgaagcatta actgagatac agaatttatt gaaggacacc gctgatcaag 2160

cactggctgt tagagaaagc ttaattgttg ctgcgagcaa tcgctttttc actcttatcc 2220

cttctattca tcctcatatt atacgggatg aggatgattt gatgatcaaa gcgaaaatgc 2280

ttgaagctct gcaggatatt gaaattgctt caaagatagt tggcttcgat agcgacagtg 2340

atgaatctct tgatgataaa tatatgaaac ttcactgtga catcaccccg ctggctcacg 2400

atagtgaaga ttacaagtta attgagcagt atctcctcaa cacacatgct cctactcaca 2460

aggactggtc gctggaactg gaggaagttt tttcacttga tcgagatgga gaacttaata 2520

agtactcaag atataaaaat aatctgcata acaagatgct attatggcac ggttcaaggt 2580

tgacgaattt tgtgggaatt cttagtcaag ggctaagaat tgcacctcct gaggcacctg 2640

ttactggcta tatgttcggc aaaggcctct actttgcaga tctagtaagc aagagcgcac 2700

aatactgtta tgtggatagg aataatcctg taggtttgat gcttctttct gaggttgctt 2760

taggagacat gtatgaacta aagaaagcca cgtccatgga caaacctcca agagggaagc 2820

attcgaccaa gggattaggc aaaaccgtgc cactggagtc agagtttgtg aagtggaggg 2880

atgatgtcgt agttccctgc ggcaagccgg tgccatcatc aattaggagc tctgaactca 2940

tgtacaatga gtacatcgtc tacaacacat cccaggtgaa gatgcagttc ttgctgaagg 3000

tgcgtttcca tcacaagagg tagctgggag actaggcaag tagagttgga aggtagagaa 3060

gcagagttag gcgatgcctc ttttggtatt attagtaagc ctggcatgta tttatgggtg 3120

ctcgcgcttg atccattttg gtaagtgttg cttgggcatc agcgcgaata gcaccaatca 3180

cacactttta cctaatgacg ttttactgta ta 3212

<210> 5

<211> 2295

<212> DNA

<213> Artificial

<220>

<223> parp2 coding region fro Zea mays

<220>

<221> misc_feature

<222> (107)..(2068)

<223> open reading frame

<400> 5
tgacctgttc catcccgcca gcccttccgc tcccacgacc caaccccact gcccggagcc 60

cccgagcctt ctcgaatctt gcgagaaccc caggggcgag gagcagatgt cggcgaggct 120

acgggtggcg gacgtccgcg cggagcttca gcgccgcggc ctcgatgtat ccggcaccaa 180

gcctgctctc gtgcggaggc tggacgccgc aatttgcgag gcggagaagg ccgtggtggc 240
tgctgcgcca accagtgtgg caaatgggta tgacgtagcc gtagatggca aaaggaactg 300
cgggaataat aagaggaaaa ggtccgggga tggggtgaa gagggaaacg gcgatacgtg 360
tacagatgtg acaaaactag agggcatgag ctatcgtgag ctgcagggat tggccaaggc 420
acgtggagtt gcggcaaatg gggcaagaa agatgttatc cagaggttgc tctcggcgac 480
tgctggtcct gctgcagttg cagatggtgg tcctctgggc gccaaggaag tcataaaagg 540
tggtgatgag gaggttgagg tgaaaaagga gaagatggtt actgccacga agaagggagc 600
tgcagtgctg gatcagcaca ttcccgatca cataaaagtg aactatcatg tcttgcaagt 660
gggcgatgaa atctatgatg ccaccttgaa ccagactaat gttggagaca acaacaataa 720
gttctatatc attcaagttt tagaatctga tgctggtgga agctttatgg tttacaatag 780
atggggaaga gttggggtac gaggtcaaga taaactacat ggtccctccc caacacgaga 840
ccaagcaata tatgaatttg aggggaagtt ccacaacaaa accaataatc attggtctga 900
tcgcaagaac ttcaaatgtt atgcaaagaa atacacttgg cttgaaatgg attatggtga 960
aactgagaaa gaaatagaga aaggttccat tactgatcag ataaaagaga caaaacttga 1020
aactagaatt gcgcagttca tatccctgat ctgcaatatt agcatgatga agcaaagaat 1080
ggtggaaata ggttataatg ctgaaaagct tccccttgga aagctaagga aagctacaat 1140
acttaagggt tatcatgttt tgaaaaggat atccgatgtt atttcaaagg cggacaggag 1200
acatcttgag caattgactg gggaattcta caccgtgatt cctcatgact ttggtttcag 1260
aaagatgcgt gaatttatta tcgatactcc tcagaaacta aaagctaagc tggagatggt 1320
tgaagccctt ggtgagattg aaattgcaac taaacttttg gaggatgatt caagtgacca 1380
ggatgatccg ttgtatgctc gatacaagca acttcattgt gatttcacac ctcttgaagc 1440
tgattcagat gagtactcta tgataaaatc atatttgaga aatacacatg gaaaaacaca 1500
ctctggttat acggtggaca tagtgcaaat atttaaggtt tcaaggcatg gtgaaacaga 1560
gcgatttcaa aaatttgcta gtacaagaaa taggatgctt ttgtggcatg gttctcggtt 1620
gagcaactgg gctgggatcc tttctcaggg tctgcgaatc gctcctcctg aagcacctgt 1680
tactggttac atgtttggca agggtgttta ctttgctgac atgttttcaa agagtgcaaa 1740
ctattgctac gcctctgaag catgtagatc tggagtactg cttttatgtg aggttgcatt 1800
gggcgatatg aatgagctac tgaatgcaga ttacgatgct aataacctgc ccaaaggaaa 1860
attaagatcc aagggagttg gtcaaacagc acctaacatg gtcgagtcta aggtcgctga 1920
cgatggtgtt gttgttcccc ttggcgaacc caaacaggaa ccttccaaaa ggggtggctt 1980
gctttataat gagtacatag tgtacaacgt agaccagata agaatgcggt atgtcttaca 2040
tgttaacttc aatttcaaga gacggtagat gttgcaaaga gctgaaactg ttgctgagat 2100
cttagcagaa catatgtgga cttatagcac caggtgccct cagcctcatt ttctgagcaa 2160

atttggtagc ctttgcattt cgattttggt ttcagcttct agccccattg atgattgata 2220

ctgagtgtat atatgaacca ttgatatcca ccttccatgt acttaagttt ttttaacatg 2280

tcccatgcat aataa 2295

<210> 6

<211> 1384

<212> DNA

<213> Artificial

<220>

<223> parp2 partial coding region from cotton

<220>

<221> misc_feature

<222> (3)..(460)

<223> Open reading frame

<400> 6

gagaagatbg ttacagcgac gaggaagggg tggctgttct ggatcaaggg atcccagatg 60

acataaaggc tcattatcat gttctacaaa agggtgatga tatctatgat gccatgttaa 120

atcagacgaa tgttgggcaa aacaataaca aattctttgt gatccagctt ctagaatctg 180

atgactcgaa gacatacatg gttcataaca gatggggtag agttggtgtg aagggtcaaa 240

ttaagttaca tggccccttt acttcacgac aagccgcaat tgatgagttt caaaccaaat 300

tctttaacaa gaccaaaaac tattggtaca acagaaaaga ctttgtttgt cacccaaagt 360

gctacacctt gctggagatg gactatgatg aaaaagaaaa ggaatctgat gtcaaaagaa 420

aggctaactc ttccattggt gctcaattgc gggagacaaa gcttgaacaa cgtgttgcta 480

agtttatctc tattatatgc aatatcagca tgatgaagca acaaatgatg gaaataggat 540

acaatgctga caagttgcct cttggtaagc taagcaaatc cacaatttta aaggggtatg 600

atgtcttaaa gaaaattgct gatgtgattg accagtcaaa caggagcaag cttgagcaat 660

taagttcgga attttacacc gtgattccac atgattttgg atttagaaaa atgcgtgatt 720

ttgtcatcga cacacctcag aagttgaaaa agaagttgga aatggttgaa gccctgggag 780

aaatagaggt cgcatcaaaa ttattaatgg atgacattac gatggaggaa gatcctttat 840

attatcggta ccaacagctt cactgtgaac tgtttcctct tgacaatgat actgaggagt 900

tcgctttgat tgtaaagtat attcagaata ctcatgctca gacacattca aattatacag 960

ttgatgttgt tcaaatattc aaggtgacaa gagacggtga aagtgaacgc tttaaaaagt 1020

tttctggaac aaaaaataga atgctgttgt ggcatggttc tcggcttact aactggactg 1080

gcattctgtc ccaaggtttg cgcattgctc cacctgaagc gcctgccacg ggttatatgt 1140

ttgggaaggg ggtttacttt gctgatatgt tctccaaaag tgcaaattat tgctatacta 1200

attctgcctt cacaacaggg gtgttgcttc tatgtgaggt tgccctgggt gacatggctg 1260

agcttctaca agctaaaagc gatgctgata agctgccgga tgggaagttg agcacaaaag 1320

gtgttggtgc aactgcaccg gatccttctg aagcccagtc acttgatgat ggtgttgttg 1380

ttcc 1384

<210> 7

<211> 1647

<212> DNA

<213> Arabidopsis thaliana

<400> 7

atggagaatc gcgaagatct taactcaatt cttccgtacc ttccacttgt aattcgttcg 60

tcgtcgctgt attggccgcc gcgtgtggtg gaggcgttaa aggcaatgtc tgaaggacca 120

tctcacagcc aagttgactc aggagaggtt ctacggcaag ctattttcga tatgagacga 180

tccttatctt tctctactct cgagccatct gcttctaatg gctacgcatt tctctttgac 240

gaattgattg atgagaaaga atcaaagaga tggttcgatg agattatccc agcattggcg 300

agcttacttc tacagtttcc atctctgtta gaagtgcatt tccaaaatgc tgataatatt 360

gttagtggaa tcaaaaccgg tcttcgtttg ttaaattccc aacaagctgg cattgttttc 420

ctcagccagg agttgattgg agctcttctt gcatgctctt tcttttgttt gtttccggat 480

gataatagag gtgcaaaaca ccttccagtc atcaactttg atcatttgtt tgcaagcctt 540

tatataagtt atagtcaaag tcaagaaagc aagataagat gtattatgca ttactttgaa 600

aggttttgct cctgcgtgcc tattggtatt gtttcatttg aacgcaagat taccgctgct 660

cctgatgctg atttctggag caagtctgac gtttctcttt gtgcatttaa ggttcactct 720

tttgggttaa ttgaagatca acctgacaat gctctcgaag tggactttgc aaacaagtat 780

ctcggaggtg gttccctaag tagagggtgc gtgcaggaag agatacgctt catgattaac 840

cctgaattaa tcgctggcat gcttttcttg cctcggatgg atgacaatga agctatagaa 900

atagttggtg cggaaagatt ttcatgttac acagggtatg catcttcgtt tcggtttgct 960

ggtgagtaca ttgacaaaaa ggcaatggat cctttcaaaa ggcgaagaac cagaattgtt 1020

gcaattgatg cattatgtac accgaagatg agacacttta aagatatatg tcttttaagg 1080

gaaattaata aggcactatg tggcttttta aattgtagca aggcttggga gcaccagaat 1140

atattcatgg atgaaggaga taatgaaatt cagcttgtcc gaaacggcag agattctggt 1200

cttctgcgta cagaaactac tgcgtcacac cgaactccac taaatgatgt tgagatgaat 1260

agagaaaagc ctgctaacaa tcttatcaga gatttttatg tggaaggagt tgataacgag 1320

gatcatgaag atgatggtgt cgcgacaggg aattggggat gtggtgtttt tggaggagac 1380

ccagagctaa aggctacgat acaatggctt gctgcttccc agactcgaag accatttata 1440

tcatattaca cctttggagt agaggcactc cgaaacctag atcaggtgac gaagtggatt 1500

ctttcccata aatggactgt tggagatctg tggaacatga tgttagaata ttctgctcaa 1560

aggctctaca agcaaaccag tgttggcttc ttttcttggc tacttccatc tctagctacc 1620

accaacaaag ctatccagcc gccttga 1647

<210> 8

<211> 598

<212> DNA

<213> Solanum tuberosum

<400> 8
gcaatggaga atagagaaga cgtgaagtca atccttccct ttttgccggt gtgtctccga 60

tcatcttctc ttttctggcc gccgctagtt gttgaagcac tgaaagccct ctctgaaggc 120

cctcattaca gcaatgttaa ctccggccaa gtcctcttcc tcgcaatctc cgacattcgg 180

aattcccttt cactacctga ttcttcaatt tcctcttctg cttcagacgg attttctctc 240

ttatttgatg atttaattcc tagggatgaa gctgttaaat ggttcaaaga agtggtgccg 300

aaaatggcgg atttgctatt gcggttgcct tccttattgg aggctcacta tgagaaggct 360

gatggtggaa ttgttaaagg agtcaacact ggtcttcgct tattggaatc acaacagcct 420

ggcattgttt tcctcagtca ggaattagtc ggtgctcttc ttgcatgttc cttcttttgc 480

tattccctac caatgataga ggtatctgta tgatcagtat gacgagaaat ttgaaaataa 540

attgaagtgc attcttcact attttgagag gattggctca ttgatacctg cgggctac 598

<210> 9

<211> 1530

<212> DNA

<213> Oryza sativa

<400> 9
atggaggcgc gcggcgacct gcgctcgatc ctgccctacc tccccgtcgt gctccgcggc 60

ggcgcgctct tctggccgcc ggcggcgcag gaggcgctca aggcgctggc gctgggcccc 120

gacgtgagcc gcgtctcctc cggcgacgtc ctcgccgacg ccctcaccga cctccgcctc 180

gcgctcaacc tcgacccact cccgcgccgc gccgccgagg gcttcgcgct cttcttcgac 240

gacctcctgt cgcgggcgca ggcgcgggac tggttcgacc acgtcgcccc ctccctcgcc 300

cgcctcctcc tccgcctccc cacgctgctc gagggccact accgcgccgc cggcgacgag 360

gctcgcgggc tccgcatcct gagctcgcag gatgccgggc tcgtgctcct cagccaggag 420

ctcgccgccg cgctgctcgc ctgcgcgctc ttctgcctgt tccccaccgc cgatagggcc 480

gaggcgtgcc tcccggcgat caatttcgat agcctatttg cggcactgtg ttataattcg 540
aggcaaagcc aggagcagaa ggtgaggtgc cttgttcact attttgacag ggtgaccgct 600
tctacaccta ctggttccgt ttcgtttgag cgtaaggttc ttcctcgccg tcctgaatct 660
gatggcatta cgtaccctga catggatact tggatgaaat ctggtgttcc cctttgcaca 720
ttccgggtat tttcctcagg cttgatagaa gatgaggaac aagaagccct tgaagttgac 780
tttgcaaata gatatttggg aggtggcgca ctttccagag gctgcgtgca ggaagaaatc 840
cggttcatga taaacccaga attgatcgtg ggcatgctct tcatggtttc aatggaagat 900
aatgaagcta tagaaattgt tggtgcagaa aggttctcac agtacatggg gtatggttcc 960
tcattccgtt ttactggtga ctacttagat agcaaaccct ttgatgcgat gggtagacgg 1020
aaaactagga tagtggcaat tgatgctttg gactgtccaa ctaggttaca gtttgaatct 1080
agtggtcttc taagggaagt gaacaaggct tttgtggat ttttggatca atcaaatcat 1140
cagctctgtg caaagcttgt ccaggattta aatacaaagg ataactgtcc aagtgtcatt 1200
cctgatgaat gcataggagt ttcaactgga aactggggtt gcggggcttt tggtggaaac 1260
cctgaaatca agagcatgat tcaatggatt gctgcatcac aggcactccg atcttttatt 1320
aactactaca cttttgagtc cgaatcactg aaaagattag aagaggtgac ccagtggata 1380
ttgcgccata ggtggacggt tggcgagttg tgggacatgc ttgtggagta ttcatcccag 1440
aggctaagag gagacaccaa tgagggcttt ttaacatggc tacttcccaa ggacatcccc 1500
aatggtgatg tagattacat gtgtgaatag 1530

<210> 10

<211> 603

<212> DNA

<213> Zea mays

<400> 10

tagggctgtg tgcaggagga aatccgcttc atgataaacc ccgaattgat tgtgggtatg 60
ctattcttgt cttgtatgga agataacgag gctatagaaa tctttggtgc agaacggttc 120
tcacagtata tgggttatgg ttcctccttt cgctttgttg gtgactattt agataccaaa 180
ccctttgatt cgatgggcag acggagaact aggattgtgg ctatcgatgc tttggactgt 240
ccagctaggt tacactatga atctggctgt ctcctaaggg aagtgaacaa ggcattttgt 300
ggatttttcg atcaatcgaa acaccatctc tatgcgaagc ttttccagga tttgcacaac 360
aaggatgact tttcaagcat caattccagt gagtacgtag gagtttcaac aggaaactgg 420
ggttgtggtg cttttggtgg aaaccctgaa atcaagagca tgattcagtg gattgctgca 480
tcacaggctc ttcgcccttt tgttaattac tacacttttg agaacgtgtc tctgcaaaga 540
ttagaggagg tgatccagtg gatacggctt catggctgga ctgtcggcga gctgtggaac 600

ata 603

<210> 11

<211> 651

<212> DNA

<213> Saccharomyces cerevisiae

<400> 11
atgaagactt taattgttgt tgatatgcaa aatgatttta tttcaccttt aggttccttg 60

actgttccaa aaggtgagga attaatcaat cctatctcgg atttgatgca agatgctgat 120

agagactggc acaggattgt ggtcaccaga gattggcacc cttccagaca tatttcgttc 180

gcaaagaacc ataaagataa agaaccctat tcaacataca cctaccactc tccaaggcca 240

ggcgatgatt ccacgcaaga gggtattttg tggcccgtac actgtgtgaa aaacacctgg 300

ggtagtcaat tggttgacca aataatggac caagtggtca ctaagcatat taagattgtc 360

gacaagggtt tcttgactga ccgtgaatac tactccgcct tccacgacat ctggaacttc 420

cataagaccg acatgaacaa gtacttagaa aagcatcata cagacgaggt ttacattgtc 480

ggtgtagctt tggagtattg tgtcaaagcc accgccattt ccgctgcaga actaggttat 540

aagaccactg tcctgctgga ttacacaaga cccatcagcg atgatcccga agtcatcaat 600

aaggttaagg aagagttgaa ggcccacaac atcaatgtcg tggataaata a 651

<210> 12

<211> 1290

<212> DNA

<213> Saccharomyces cerevisiae

<400> 12
ttaggtccat ctgtgcgctt cgttatcacc actccaactt cgttcagtat atcccaattc 60

ctctttcact ctcttcacag tggcaggatc tcccatattt ttacctaagt tatcagaaat 120

tttgatagcg tgattaccat ttacttctaa tagtttgata acgatgttta acggctcact 180

tttaacctgg ggttctgact tcttacgaaa atcattagta aagtttgtgc caataccgaa 240

tgtggctagc attccattct ctttagctgc atgggagtaa gttattgcct tttcgacgtt 300

caaagaatcg gaataacaga taatcttcga gaatttaggc aatttcaaca cgtcatggta 360

atggtgggaa atctttttgg tatactcaac tgggtctcca gaatcttgtc taacaccgac 420

gtaagcatca gaatatggtg gacggaatga ttttaaaaag tcatcagttc caaaagtatc 480

cgttaatgct aaaccagcat tttttgcacc aaaagtattg atccaacaat ccattgcatt 540

tttattggca tgcaaataat cttcactaat agaagcgact cccataaccc actcgtgagc 600

cacagtaccg attggcttga ctccatattt cttggcaaat aaaatatttg atgtgcctaa 660

taatagcgat ttgtttctgt ctgggttacc gttcacagct ttcatgattc cttgcataat 720
tagatcttga gccttcagag atctacgacg tcttgtacca aattcactga atctaatacc 780
attatcaaac aaagtttccg ccttcttctc agcttgttct aattggtttt cgtagtccca 840
gtcgatgtca acaaatttaa aatacgcttc tgatattagg gacagtaagg ggatctcata 900
aaggatagta tccttccaac taccactgac taaaattttc aatttgtagt gggtgggctt 960
gccctcgatt tcttctgaag tgaaggaaat ctgctcttca gggtgtagtt tgtaattaga 1020
actgctaata tacttaatat atgccgatgg caaatatggg atttcctgtt ttaagtattc 1080
aatttcctct tctgtgaacc tcaaatttcc caaatacgaa aattgctctt tcaaccaatt 1140
aatggcttcc ttattgaagg tcaattggga cgacctgttg gtatatttat aagtaactgt 1200
aacatctgga aaattagtga agacagcagc atgcatcgta atcttgtaca tgtctgtgtc 1260
caaaagagac tttatcactg gttctgacat 1290

<210> 13
<211> 1206
<212> DNA
<213> Saccharomyces cerevisiae
<400> 13
atggatccca caagagctcc ggatttcaaa ccgccatctg cagacgagga attgattcct 60
ccacccgacc cggaatctaa aattcccaaa tctattccaa ttattccata cgtcttagcc 120
gatgcgaatt cctctataga tgcacctttt aatattaaga ggaagaaaaa gcatcctaag 180
catcatcatc accatcatca cagtcgtaaa gaaggcaatg ataaaaaaca tcagcatatt 240
ccattgaacc aagacgactt tcaaccactt tccgcagaag tgtcttccga agatgatgac 300
gcggatttta gatccaagga gagatacggt tcagattcaa ccacagaatc agaaactaga 360
ggtgttcaga aatatcagat tgctgattta gaagaagttc cacatggaat cgttcgtcaa 420
gcaagaacct tggaagacta cgaattcccc tcacacagat tatcgaaaaa attactggat 480
ccaaataaac tgccgttagt aatagtagca tgtgggtctt tttcaccaat cacctacttg 540
catctaagaa tgtttgaaat ggctttagat gcaatctctg aacaaacaag gtttgaagtc 600
ataggtggat attactcccc tgttagtgat aactatcaaa agcaaggctt ggccccatcc 660
taccatagag tacgtatgtg tgaattggcc tgcgaaagaa cctcatcttg gttgatggtg 720
gatgcatggg agtcattgca accttcatac acaagaactg ccaaggtctt ggatcatttc 780
aatcacgaaa tcaatattaa gagaggtggt gtagctactg ttactggaga aaaaattggt 840
gtgaaaataa tgttgctggc tggtggtgac ctaatagagt caatgggtga accaaacgtt 900
tgggcggacg ccgatttaca tcacattctc ggtaattacg gttgtttgat tgtcgaacgt 960
actggttctg atgtaaggtc ttttttgtta tcccatgata ttatgtatga acatagaagg 1020

aatattctta tcatcaagca actcatctat aatgatattt cttccacgaa agttcgtcta 1080

tttatcagac gcgccatgtc tgtacaatat ttgttaccta attcggtcat caggtatatc 1140

caagaacata gactatatgt ggaccaaacc gaacctgtta agcaagttct tggaaacaaa 1200

gaatga 1206

<210> 14

<211> 1188

<212> DNA

<213> Saccharomyces cerevisiae

<400> 14

atggatccca ccaaagcacc cgattttaaa ccgccacagc caaatgaaga actacaacca 60

ccgccagatc caacacatac gataccaaaa tctggaccca tagttccata tgttttagct 120

gattataatt cttcgatcga tgctcctttc aatctcgaca tttacaaaac cctgtcgtca 180

aggaaaaaaa acgccaactc aagcaaccga atggaccata ttccattaaa tactagtgac 240

ttccagccac tatctcggga tgtatcatcg gaggaggaaa gtgaagggca atcgaatgga 300

attgacgcta ctctacagga tgttacgatg actgggaatt tgggggtact gaagagccaa 360

attgctgatt tggaagaagt tcctcacaca attgtaagac aagccagaac tattgaagat 420

tacgaatttc ctgtacacag attgacgaaa aagttacaag atcctgaaaa actgcctctg 480

atcatcgttg cttgtggatc attttctccc ataacatacc tacatttgag aatgtttgaa 540

atggctttag atgatatcaa tgagcaaacg cgttttgaag tggttggtgg ttatttttct 600

ccagtaagtg ataactatca aaagcgaggg ttagccccag cttatcatcg tgtccgcatg 660

tgcgaattag catgcgagcg gacatcatct tggttaatgg ttgatgcctg ggaatcttta 720

caatcaagtt atacaaggac agcaaaagtc ttggaccatt tcaatcatga aataaatatc 780

aagagaggtg gaatcatgac tgtagatggt gaaaaaatgg gcgtaaaaat catgttattg 840

gcaggcggtg atcttatcga atccatgggc gagcctcatg tgtgggctga ttcagacctg 900

caccatattt tgggtaatta tggatgtttg atcgtggaaa ggactggttc tgatgttagg 960

tccttcttgc tttcccatga tatcatgtat gaacacagaa gaaatatcct tattatcaaa 1020

caacttattt acaatgatat ttcctctacg aaagtgcggc ttttcatcag acgtggaatg 1080

tcagttcaat atcttcttcc aaactctgtc atccgttaca tccaagagta taatctatac 1140

attaatcaaa gtgaaccggt caagcaggtc ttggatagca aagagtga 1188

<210> 15

<211> 2145

<212> DNA

<213> Saccharomyces cerevisiae

<400> 15

```
atgtcacatc ttatcacttt agctacatgc aacttgaatc aatgggccct agattttgaa      60
ggtaatagag accgtatcct acagtccatt aagattgcca aagagagggg tgccaggtta     120
cgtgtcggcc cagaactgga aataactggc tacggatgtt tagatcattt tttagaaaat     180
gacgtttgcc ttcattcatg ggaaatgtat gctcaaatca ttaagaataa agaaacccat     240
ggattaatac ttgacattgg tatgcccgtt ctacacaaga atgttcgtta taattgtcgt     300
ttgttatcct tggatggtga gatattgttc ataagaccta agatttggtt agctaatgat     360
ggtaactata gggaaatgag atttttcaca ccttggatga aacctggcgt ggtggaggac     420
tttatccttc cacctgagat tcagaaagtt accggccaga gacttgtgcc atttggggac     480
gctgtgataa attcattgga tacatgcatt ggtacagaaa cttgtgaaga attgtttaca     540
cctcaatccc cccacatcgc catgtcttta gatggtgtgg aaatcatgac aaactcatct     600
ggttctcatc atgaactgcg taagttaaat aaaaggttag acctaatttt aaatgccact     660
aaacgttgtg gtggtgttta cttgtatgca aatcaaagag gttgtgatgg tgacagatta     720
tattatgatg gctgtgcact aattgccatc aatggtacaa ttgtagccca aggttcacaa     780
ttttcgctag atgatgtgga agtagttact gctactgtgg acctagaaga ggtgaggagt     840
tatcgtgcag ctgtcatgtc tcgtggccta caagcctcct tggcagaaat aaagttcaag     900
cgtattgata ttcctgtaga attggcttta atgacctcca gatttgatcc tacagtgtgt     960
ccaacaaaag tccgcgagcc tttctatcac tctcctgagg aagaaattgc actgggacct    1020
gcttgctgga tgtgggatta tttaagacgt tgtaacggaa cagggttttt ccttccctta    1080
tctgggggca ttgactcttg tgcaactgca atgattgtcc actctatgtg ccgtttagtg    1140
accgacgctg ctcaaaatgg aaatgagcaa gttatcaaag acgttcgtaa gataacacgt    1200
agcggcgatg attggattcc agacagtcca caggatctag cctcaaaaat atttcactcc    1260
tgtttcatgg gtacggaaaa ttcatccaag gagacaagaa acagagcaaa ggacctttcc    1320
aatgcaattg gatcttacca cgtggattta aagatggact cattggtatc cagtgtggtg    1380
tccttattcg aagtagccac tggcaaaaaa ccaatataca aaatatttgg gggatctcaa    1440
atcgagaact tggctttaca aaacatccag gcgcgtctaa gaatggttct ttcttatctt    1500
tttgcgcaac tgttgccgtg ggttcgtggt atcccaaact cgggtggatt gttagtactt    1560
ggtagcgcaa atgttgatga gtgcttacgt gggtatctaa caaaatatga ctgctcctcc    1620
gcagatatca accctattgg gggtatttca aaaactgact tgaaaagatt cattgcctac    1680
gcatcaaaac aatataacat gccaatcttg aatgactttt taaacgctac accaactgca    1740
gaattagaac ctatgactaa agattacgtt caatcggatg agatagatat ggggatgacg    1800
tatgaagaat tgggcgtgtt tggttaccta agaaaggttg aaaaatgtgg tccttattct    1860
atgttcttaa aacttcttca tcaatggtcc ccaaagttaa cacctcgtca aatatctgaa    1920
```

```
aaggtgaaaa gatttttctt cttctatgcc atcaacagac acaagcaaac tgttttaact    1980
cctagttatc atgctgaaca gtattcacca gaagacaaca gatttgactt acgtcctttc    2040
ttaatcaacc caagatttcc atgggcttca agaaaaattg atgaagttgt cgagcagtgt    2100
gaagcacata aaggctcaac gcttgacatt atgtctattg attag                    2145
```

<210> 16

<211> 597

<212> DNA

<213> Arabidopsis thaliana

<400> 16

```
atggcttcct catcaacgag aaagtacgag acacgaaagc gagatccaaa ctctaaaatc      60
gcagctcttc tcgttatcga catgcagaat cacttctcct ccatggccaa acccatcctc     120
aacaacgttc tcaccaccat cgacatctgc cgacgcgcct cagtccccgt attctttacg     180
cgtcacaacc acaaatcccc gaccgaccac ggcatgctcg gcgagtggtg taacggcgat     240
gtaatccttg acggaaccac cgattctgaa atcatccagg agatacaagg ccaagtaacc     300
ggaccagacg agatggtgga gaagaacacg tacagtgcgt ttaacaaaac ccgcctccag     360
gaaaacctgg aaaagatcgg agtaaaggag gtgatcgtga tcggagtgat gacgaacttg     420
tgctgtgaga caacggcgcg tgaagcgttt attaagggtt ttagggtttt tttctcgacg     480
gacgcgactg cgacgtttaa tgaggagctt cacgaggcta cgctaatgaa tctcgctttt     540
ggcttcgctt atctcgtcga ttgcgataaa ctccggcgaa gtctactcgg taactaa        597
```

<210> 17

<211> 597

<212> DNA

<213> Arabidopsis thaliana

<400> 17

```
atggcttctt catcatcgag aacgtacgag acacgaaagc gagagccaaa tcctaaaatc      60
gcagctcttc tcgtcatcga tatgcagaat cacttctact ctatggctga accaatcctc     120
caaaacgctc tcaccaccat cgacatctgc cgacgcgctt caatccccgt attcttcacg     180
cgccacaacc acaaatcccc aaccgaccac ggcatgctcg gagagtggtg gaacggcgat     240
ctaatcctcg acggaaccac tgattccgaa atcatcccgg aaatcaatcg ccaggtcacc     300
ggaccagacg aaatcgtgga gaagagcacg tacagtgcgt ttaacaacac gcaccttcag     360
gagaagctgg acaagatcgg agtgaaggag gtgatcgtta tcggagtgat gacgaaccta     420
tgctgtgaga cgacggcgcg tgaagcgttt gtaaaggggt ttagggtttt tttctcgacg     480
gacgcgactg cgacggttaa tgaagagctt cacgaggcta ctctaatgaa tctcgcgtat     540
```

ggctttgctt atctcgtcga ttgcgataga ctccggcgag gtctactcag tagttaa 597

<210> 18

<211> 591

<212> DNA

<213> Arabidopsis thaliana

<400> 18
atggccgaga gatggaggaa cacggctcta ctcgtcatcg acatgcagaa cgatttcata 60

gaggaaggtg ctgtgacgca agtgaaagga ggaaaatcta tagttcctaa tgttatcaga 120

gtcgtcgaac tcgcgaggca gcgtggtatt ctcgtaattt gggttgttcg agaacatgat 180

cgtcaaggaa gagatgttga attattcagg cgccataact acagttctga gaaagtcggg 240

ccagttatta aaggcaccgt aggagcagaa ttggttgatg gattgatgat caacgaagaa 300

gatgactata agattgtgaa aactcgtttc agtgctttct ttagtaccaa tcttcattcc 360

ttcttgcaaa cttcaggggt taccaagtta gtgattgctg gtgtgcaaac gccgaactgt 420

atccggcaaa cggtgtttga tgcagtggcg ctggattatc ccaatgtgac tgttattaca 480

gatgccacag ctgctgcaac accagagatc catactgcga atattcttga catgaagaat 540

attggagtca agactcctac attacacgag tggtccgaag aacttgcttg a 591

<210> 19

<211> 1680

<212> DNA

<213> Arabidopsis thaliana

<400> 19
atggagaaga aagaaaatgg tctcgatgga aagcaatcgg gtcgggtcat taacggaccc 60

actaacccga tggtcacacc tctgctcaac gatctttacc aattcaccat ggcttatgct 120

tattggaaag ctggcaaaca atctgagcga tctgtgtttg atctgtattt tcgtaagaat 180

ccttttggtg gagaatacac tatctttgct ggtttagaag aatgcatcaa atttctcgct 240

aatttcaatt tgactgatga agagatcgat ttcgttcgtg attcgttacc tggatgtgag 300

gaagctttct gtgattatct tcgagggctt gattgttctg acattgaagt gtatgccatt 360

tcggaaggat cagttgtttt tcctaaagtt cctttactca gaatcgaagg tcctgttgct 420

gtggtgcaat tgttggaaac tccattcctc aatctcatca attacgcatc tttggttgct 480

acaaatgcag caagacatcg gtttgttgca ggaaaatcta agcttctgct tgagtttggt 540

gctagaagag ctcagggacc cgatggtgca ataagcgcat caaagtattg ctaccttgga 600

ggttttgatg caacaagtaa tgttgcagcg ggaaaactgt ttgggatacc cctccgtggt 660

actcattccc atgcttttgt tagctcattc atgagccttg atgaaattgt tgacaaagtg 720

cttcgaagtt ctgatgggaa aagcacttgt aaggatttta tatgtttggt ccaaacttgc 780
ctaacaaaga ttcagaattc atcttcatta caaggaattt tttccgagac aaatcaaagc 840
gagcttgcag cgttcatttc atatgcactg gcattcccaa actcctttct cgctcttgta 900
gacacttatg atgtgatgaa gagtggtatt ccaaacttct gtgctgttgc tctagcactt 960
aatgaattgg gatacaaagc agtaggcatt agactggatt caggtgactt agcctatctt 1020
tctactgagg tcaggaaatt cttttgtgcc atagagagag acctcaaagt tcctgatttc 1080
gggaagatga tcgtcactgc tagtaacgat ctaaacgaag agacagtcga tgctctaaat 1140
aaacagggtc atgaagtaga tgcatttgga attggaacca acttagtgac ttgctatgcg 1200
caagctgcgt taggttgtgt tttcaaactt gtggaaataa acaatcagcc tcggatcaaa 1260
ctttctgaag atgttactaa ggtatcgatt ccatgtaaaa agcgtactta cagattgttc 1320
ggaaaagagg gttaccctct tgttgatata atgactggag agaacgaacc acctccaaag 1380
gtcggtgaaa ggttactttg ccgtcatcca ttcaatgaat caaaaagggc ttatgtggtt 1440
ccacaacgcg ttgaagagct tctgaaatgt tattggcgtg gcaatgcaga tgaagctagg 1500
gaagagctag agccattgaa agagctaaga aatcgttgca tcaaacagct cgaaaatatg 1560
cgacccgatc atatgagaag attaaaccct actccttata aggttagtgt cagcgccaag 1620
ttgtatgact tcatccactt cctctggctc aacgaagctc ctgtcggtga actgcattga 1680

<210> 20

<211> 1674

<212> DNA

<213> Arabidopsis thaliana

<400> 20
atggagccga aagagaacgg ctcagaattg ggtcagaaga tcattgacgg accaacgaat 60
ccaatggtca cacctttact caatgatctt tatcaattca ccatggctta tgcttattgg 120
aaagctggca aacacaacga acgatccgtt ttcgatctgt attttcgtaa gaacccattt 180
ggtggtgagt acactgtgtt tgctggatta gaagagtgtg ttaagttctt agccaatttc 240
aaattgactg atgaagaaat cgatttcgtt caagagtgtt tgcctggatc tgaggaagct 300
ttttgtgatt atcttagagg gcttgattgt tctgatgttg aagtttatgc aattccggaa 360
ggatcagttg tttttcctaa agtacctctc atgagagttg aaggacctgt tggtgttgtt 420
caattgttgg aaactccatt cctcaatctt gtcaattttg catctttggt agctactaac 480
gcagctaggc atcgctttgt tgccggaaaa tctaagagtc tactcgagtt tggtgctcga 540
agggctcagg gtccggatgg tgcaataagc gcatcaaaat attgctacct tggaggtttt 600
gatgcaacaa gtaatgtagc agctggaaaa ctttttggga ttcctcttcg tggaacacac 660
tctcatgctt atgttagctc attcatgagt actgatgaga ttgttgacaa agtacttcgt 720

agtgctgatg ggaaaaccac gtgcgaggat tttgttagtc atgttcagac atggttaaaa 780
aagattcagt attcaccatc tctaagtggc attttctctg agacaaatca aagcgagcta 840
gcagctttca cctcatatgc actggcattc cccaaaactt ttcttgccct cgtagataca 900
tacgatgtga tgaagagtgg aatccctaac ttctgtgcag ttgctttagc actcaatgac 960
tttggatata aagcattagg tattagactg gattcaggtg atttagctta tctatctaga 1020
gaggccagaa atttcttctg cacggtagag agagaactaa aagtgcctgg ttttgggaag 1080
atggtcgtca ctgctagtaa tgatctaaat gaagagacga ttgacgcttt aaataaacag 1140
ggacatgagg tggatgcttt tggcatcggg acctacttgg tcacttgcta ttcacaagcg 1200
gccttaggtt gcgttttcaa acttgtggag ataaacaatc agcctcggat taaactttct 1260
gaagatgtta caaaggtatc aataccgtgt aaaaagcgaa gttacagatt atacggcaaa 1320
gaaggttacc ctctggtaga tataatgact ggagagaacg aaccacctcc aaaggttggt 1380
gagcgtttac tttgtcgtca cccattcaac gaatccaaaa gagcatatgt agtgccacaa 1440
cgtgtcgaag agctcctcaa atgttattgg cgtggaagtg cagatgaagc aagagaagta 1500
ttaccgcctt tgaaagagat aagagaccgt tgcatcaaac agctcgaaaa catgcgacct 1560
gatcatatga ggagattaaa cccaactcct tataaggtta gtgtaagcgc aaagctgtac 1620
gatttcatcc acttcttatg gctaaacgaa gcacctgttg gtgaattgca gtga 1674

<210> 21

<211> 717

<212> DNA

<213> Arabidopsis thaliana

<400> 21

atggatgtcc cgttaccagt cgagaaatta tcttatggat caaacactga ggacaaaact 60
tgtgtagtgc ttgtggcaac tgggagtttc aatcctccta ctttcatgca tttacgcatg 120
tttgagctgg cgagagatga attacgctca aaaggatttc atgttcttgg aggatatatg 180
tctcctgtta atgatgcata taagaagaag ggccttttat ctgcagaaca tcgtttagag 240
atgtgtaatg tatcatgtca aagctctgac tttgtaatgg ttgatccgtg ggaggcatct 300
caaagcaact accaacgaac tttgacggtt ttatcaaggg tcaagacttt cttaacaaca 360
aatcgacatg tacccgagga atctctcaaa gtcatgctac tatgtggctc ggatttactg 420
ctatctttct gcactcccgg tgtttggatc cctgaacagt taagaactat ttgcaaagat 480
tatggcattg tgtgcatccg tagagaagga caagatgttg aaaatatgat ctctggtgac 540
gaaatcttaa acgaaaactg tgctaacgtc aaaatcgttg acaatactgt tcctaatcaa 600
atcagttcga gtagattaag gcaatgcatt tcgcgagggt tatcggttaa atacttgact 660
gaagatggag taatagatta tatcagacaa catcaactat acactgagct cacatga 717

<210> 22

<211> 2178

<212> DNA

<213> Arabidopsis thaliana

<400> 22

```
atgaggctgt tgaaggttgc tacgtgtaac ttgaaccaat gggccatgga tttcgagagc      60
aacatgaaga acatcaaggc ttcgatcgct gaggcaaagg ctgctggtgc tgttatcagg     120
cttggacccg agctcgaggt cactggctat ggttgcgagg atcacttctt ggaactcgac     180
actgtcactc atgcgtggga gtgtttgaag gaattgctgc ttggtgattg gacggatgat     240
attttgtgca gcataggaat gcctgtgatt aaaggagcag agcgttataa ctgccaggtt     300
ctctgtatga acagaagaat catcatgatt cgaccgaaaa tgtggctcgc aaacgatgga     360
aactataggg agctacggtg gttcacagct tggaagcaga gagaagagct agaggaattt     420
cagctcccca ttgaaatttc agaggctttg gagcagaaat cagtcccttt tggttatggt     480
tacatccagt ttatcgacac ggctgttgca gctgaagtct gtgaggaact gtttagtcca     540
cttcctcctc atgccgagct cgcattgaat ggtgttgaag tatttatgaa tgcaagtggg     600
agtcatcacc aacttaggaa actagatatt cgtctgaatg cttttatggg ggctactcat     660
gctcgtggtg gggtgtatat gtacagtaat caacaaggat gcgatggtag ccgcttatac     720
tacgatggat gtgcatgtat tgttgtaaac gggaatgttg ttgctcaagg ctcacaattc     780
tcgttgagag acgttgaggt catcatttca caagtggatc ttgatgcggt tgctagcctt     840
cgtggatcta taagtagctt tcaggaacaa gcaagctgca aggttaaagt atcttcagta     900
gctgtgccct gtagacttac acagtccttc aacctgaaaa tgacactaag cagtccgaag     960
aagatcattt accactctcc acaagaagaa atagcctttg gtcccgcttg ctggatgtgg    1020
gactatttga gaagaagtgg cgcttcagga tttttgcttc ctctttctgg cggagcagac    1080
agctcctccg tggcagctat tgttggctgc atgtgccaac ttgttgttaa agagattgca    1140
aagggagatg agcaagtaaa agctgatgcg aaccgaattg ggaattatgc taatgggcag    1200
tttcctactg atagcaaaga gtttgccaaa cgaatatttt acactgtctt tatgggttct    1260
gaaaacagtt ctgaggagac aaaaaggcgt tcaaagcagc tggcagacga gattggtgct    1320
tggcatcttg atgtttgcat agatggtgtt gtctctgcag ttttatcatt atttcaaaca    1380
gttacaggca agcgaccaag gtataaggtt gatggaggat caaatgctga gaaccttggg    1440
ttgcagaaca ttcaagcccg gatgagaatg gtgttagcat ttatgttagc gtctctcttg    1500
ccttgggttc atagcaaacc aggcttttac cttgttctag gcagctccaa cgttgatgaa    1560
ggacttcgtg gttacctgac aaagtatgat tgcagctcag cagacataaa tcctatagga    1620
agtatcagta aaatggattt gaggttgttc ttaaaatggg ctgcaacgaa tctcggatat    1680
```

```
ccatccttgg cagagataga agctgctcca ccaacagctg agcttgagcc cattcgttct   1740
gactattctc agctcgatga agtcgacatg ggaatgacat atgaagagct ttcagtctat   1800
ggaaggatga ggaagatatt ccgttgtgga ccagtatcta tgttcaagaa tctatgttac   1860
aagtggggaa caaagctaag cccagcagaa gtagctgaga aagtgaagta tttcttcaaa   1920
tattattcga tcaatcgaca caaaatgact gtcctcacac cgtcttatca cgctgagagt   1980
tactccccag aggacaacag attcgatctg aggcagtttc tgtacaacag caagtggcca   2040
taccagttta agaagattga cgagattgtt gacagcttaa atggtgactc agttgctttc   2100
ccggaagaag aagcaaactc caacaaagaa attggagttg tagcagcaaa ctccggagac   2160
ccaagtgcgg gtctctga                                                 2178
```